(19) Europäisches Patentamt
European Patent Office
Office européen des brevets

(11) **EP 4 061 904 B1**

(12) **EUROPEAN PATENT SPECIFICATION**

(45) Date of publication and mention
of the grant of the patent:
**21.05.2025 Bulletin 2025/21**

(21) Application number: **20815942.6**

(22) Date of filing: **17.11.2020**

(51) International Patent Classification (IPC):
***C09J 133/08*** *(2006.01)*     ***C08F 220/20*** *(2006.01)*

(52) Cooperative Patent Classification (CPC):
(C-Sets available)
**C09J 133/08**                              (Cont.)

(86) International application number:
**PCT/IB2020/060823**

(87) International publication number:
**WO 2021/099941 (27.05.2021 Gazette 2021/21)**

(54) **CROSSLINKABLE AND CROSSLINKED ACRYLIC ADHESIVE COMPOSITIONS**

VERNETZBARE UND VERNETZTE ACRYLKLEBSTOFFZUSAMMENSETZUNGEN

COMPOSITIONS RÉTICULÉES ET RÉTICULABLES D'ADHÉSIVES ACRYLIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2019 US 201962938486 P**

(43) Date of publication of application:
**28.09.2022 Bulletin 2022/39**

(73) Proprietor: **3M Innovative Properties Company
Saint Paul, Minnesota 55133-3427 (US)**

(72) Inventors:
• **SIMONE, Peter M.**
**Saint Paul, Minnesota 55133-3427 (US)**
• **CLAPPER, Jason D.**
**Saint Paul, Minnesota 55133-3427 (US)**
• **ELLIS, Mark F.**
**Saint Paul, Minnesota 55133-3427 (US)**
• **BEAGI, Hollis Z.**
**Saint Paul, Minnesota 55133-3427 (US)**
• **WESSEL, Matthew H.**
**Saint Paul, Minnesota 55133-3427 (US)**

(74) Representative: **Mathys & Squire
Theatinerstraße 7
80333 München (DE)**

(56) References cited:
**US-A1- 2016 083 629     US-A1- 2016 289 514
US-A1- 2019 002 734**

(52) Cooperative Patent Classification (CPC): (Cont.)

C-Sets
**C09J 133/08, C08L 33/06;**
**C09J 133/08, C08L 33/062;**
**C09J 133/08, C08L 33/066;**
**C09J 133/08, C08L 33/08**

## Description

### Technical Field

A crosslinkable composition, a crosslinked composition formed upon exposure of the crosslinkable composition to ultraviolet radiation or ionizing radiation, articles containing these compositions, and methods of making the articles are described.

### Background

Adhesive tapes are virtually ubiquitous in the home and workplace. In one of its simplest configurations, the adhesive tape includes a backing layer and an adhesive layer attached to the backing layer. The adhesives are often either a pressure-sensitive adhesive that is tacky at room temperature or a heat bondable adhesive that is not tacky at room temperature but that can adhere to a surface when heated.

Both pressure-sensitive adhesives and heat bondable adhesives have been used in bonding various components of electronic displays. To enable good performance of the electronic displays, the selected adhesive needs to have suitable optical, mechanical, and electrical properties that remain relatively stable during the lifetime of the electronic display. Acrylic adhesive compositions that comprise mixtures of two acrylic polymers that differ in their molecular weights and bear polar groups are known e.g. from US 2016/083629 A1, US 2016/289514 A1 and US 2019/002734 A1.

### Summary

A crosslinkable composition, a crosslinked composition formed upon exposure of the crosslinkable composition to ultraviolet radiation or ionizing radiation, articles containing these compositions, and methods of making the articles are described. The crosslinkable compositions contain two different (meth)acrylate copolymers and can be applied to a substrate using an extrusion process. While being extruded, the crosslinkable compositions advantageously are resistant to crosslinking and/or significantly increasing in molecular weight. The crosslinked compositions can function as either a pressure-sensitive adhesive composition or a heat bondable adhesive composition and are particularly well suited for use in electronic devices.

In a first aspect, a crosslinkable composition is provided. The crosslinkable composition contains 50 to 95 weight percent of a first (meth)acrylate copolymer and 5 to 50 weight percent of a second (meth)acrylate copolymer based on a total weight of polymeric material in the crosslinkable compositions. The first (meth)acrylate copolymer has a weight average molecular weight (Mw) in a range of 100,000 Daltons to 1,500,000 Daltons and is a reaction product of a first reaction mixture containing 1) an alkyl (meth)acrylate, 2) an optional hydroxy-containing monomer in an amount in a range from 0 to 10 weight percent based on a total weight of monomers in the first reaction mixture, and 3) an optional ultraviolet (UV) crosslinking monomer having an aromatic ketone group. The second (meth)acrylate has a weight average molecular weight greater than 10,000 Daltons to less than 100,000 Daltons and is a reaction product of a second reaction mixture containing 1) an alkyl (meth)acrylate, 2) a hydroxy-containing monomer in an amount greater than 15 to 70 weight percent based on a total weight of monomers in the second reaction mixture, and 3) an optional UV crosslinking monomer having an aromatic ketone group.

In a second aspect, a crosslinked composition is provided that is a reaction product of a crosslinkable composition after exposure to ultraviolet radiation or ionizing radiation. The crosslinkable composition is the same as described above in the first aspect.

In a third aspect, an article is provided that contains a substrate and a layer of the crosslinkable composition positioned adjacent to the substrate. The crosslinkable composition is the same as described above in the first aspect.

In a fourth aspect, an article is provided that contains a substrate and a layer of the crosslinked composition positioned adjacent to the substrate. The crosslinked composition is the same as described above in the second aspect.

In a fifth aspect, a method of making an article is provided. The method includes providing a substrate, positioning a layer of a crosslinkable composition adjacent to the substrate, and exposing the layer of the crosslinkable composition to ultraviolet radiation or ionizing radiation to form a layer of a crosslinked composition.

### Detailed Description

Crosslinkable compositions, crosslinked compositions, articles containing these compositions, and methods of making the articles are provided. The crosslinkable compositions, which include two different (meth)acrylate copolymers, are used to form the crosslinked compositions upon exposure to ultraviolet radiation or to ionizing radiation. The crosslinkable compositions are well suited for use with hot melt processing methods. The crosslinked compositions can function as a pressure-sensitive adhesive or as a heat bondable adhesive.

The use of (meth)acrylate copolymers having pendant hydroxy groups are advantageous in adhesive compositions used for electronic devices to provide hydrophilicity to the adhesive composition and to enhance the dielectric properties of the adhesive composition. The hydrophilicity can be controlled to minimize phase separation of absorbed water within the adhesive composition when an electronic display device is subjected to fluctuations in ambient temperature and humidity. Phase separation tends to lead to increased haziness, which is undesirable for applications where clarity of the adhesive composition is important. Additionally, the polar hydroxy groups can increase the dielectric constant of the adhesive composition. This increased dielectric constant can facilitate tuning of the touch sensitivity of electronic devices.

Many known pressure-sensitive or heat bondable adhesive compositions contain a single type of (meth)acrylate copolymer as the main (base) component of the composition. Some of these (meth)acrylate copolymers have been prepared using hydroxy-containing monomers. When the amount of the hydroxy-containing monomer is increased sufficiently to advantageously impact the hydrophilicity of the (meth)acrylate copolymer and/or to enhance the dielectric constant of the (meth)acrylate copolymer, the viscosity of the crosslinkable composition may increase to an unacceptable level or the material may being to gel when subjected to high temperature processing such as hot melt extrusion. Surprisingly, the addition of hydroxy-containing monomeric units to a low molecular weight (meth)acrylate copolymer (i.e., second (meth)acrylate copolymer) that is blended with a base (meth)acrylate copolymer (i.e., first (meth)acrylate copolymer) can advantageously address the viscosity issues of the crosslinkable composition. The base (meth)acrylate copolymer can be made without hydroxy-containing monomers or with an amount that does not adversely increase its viscosity under extrusion conditions.

Thus, a crosslinkable composition is provided that contains 50 to 95 weight percent of a first (meth)acrylate copolymer and 5 to 50 weight percent of a second (meth)acrylate copolymer based on a total weight of polymeric material in the crosslinkable compositions. The first (meth)acrylate copolymer has a weight average molecular weight (Mw) in a range of 100,000 Daltons to 1,500,000 Daltons and is a reaction product of a first reaction mixture containing 1) an alkyl (meth)acrylate, 2) an optional hydroxy-containing monomer in an amount in a range of 0 to 10 weight percent based on a total weight of monomers in the first reaction mixture, and 3) an optional ultraviolet (UV) crosslinking monomer having an aromatic ketone group. The second (meth)acrylate has a weight average molecular weight greater than 10,000 Daltons to less than 100,000 Daltons and is a reaction product of a second reaction mixture containing 1) an alkyl (meth)acrylate, 2) a hydroxy-containing monomer in an amount greater than 15 to 70 weight percent based on a total weight of monomers in the second reaction mixture, and 3) an optional UV crosslinking monomer having an aromatic ketone group. Additional optional monomers such as non-hydroxy-containing polar monomers can be included in the first reaction mixture and/or second reaction mixture.

As used herein, the term "(meth)acrylate" refers to either a methacrylate or acrylate. In many embodiments, the (meth)acrylate is an acrylate. Similarly, the term "(meth)acrylic acid" refers to methacrylic acid or acrylic acid and the term "(meth)acrylamide" refers to acrylamide or methacrylamide. All these monomers have a (meth)acryloyl group of formula $CH_2=CR-(CO)-$ where R is hydrogen or methyl.

The term "monomer" refers to a group having a free radically polymerizable group, which is typically a (meth) acryloyl group or a vinyl group. The term "monomeric unit" refers to the polymerized version of the monomer within the polymeric material. A monomeric unit in the polymeric material is derived from the corresponding monomer in a reaction mixture used to form the polymeric material.

As used herein, the term "polymeric material" and "polymer" are used interchangeably to refer to a homopolymer, copolymer, terpolymer, and the like, or a mixture thereof. The term "copolymer" refers to a polymer prepared using two or more different monomers. The tackifier, which has a comparatively low molecular weight compared to the (meth)acrylate copolymers disclosed herein, usually is not considered to be a polymer in this context.

The term "pressure-sensitive adhesive", as defined by the Pressure-Sensitive Tape Council, has the following properties: (1) aggressive and permanent tack, (2) adherence with no more than finger pressure, (3) adequate ability to hold onto an adherend, and (4) adequate cohesive strength to be removed cleanly from the adherend. Based on the Dahlquist criterion, pressure-sensitive adhesives are those that have an elastic modulus of less than $1 \times 10^6$ dynes/cm$^2$ ($1 \times 10^5$ Pa) at room temperature or below. That is, pressure-sensitive adhesives are tacky to room temperature or below.

The term "heat bondable adhesive" refers to an adhesive composition that requires heating above its glass transition temperature (typically above room temperature) and/or to a temperature at which the modulus of the adhesive satisfies the Dahlquist criterion (e.g., to be tacky).

The term "and/or" such as in the expression A and/or B means either A alone or B alone or both A and B.

The terms "in a range of" or "in the range of" are used interchangeably to refer to all values within the range plus the endpoints of the range.

First (Meth)acrylate Copolymer

The first (meth)acrylate copolymer in the crosslinkable composition forms an elastomeric material upon crosslinking in the presence of the second (meth)acrylate copolymer. The first (meth)acrylate copolymer has a weight average molecular weight (Mw) in a range of 100,000 Daltons to 1,500,000 Daltons and is a reaction product of a first reaction mixture containing 1) an alkyl (meth)acrylate, 2) an optional hydroxy-containing monomer in an amount in a range of 0 to 10 weight percent based on a total weight of monomers in the first reaction mixture, and 3) an optional ultraviolet (UV) crosslinking monomer having an aromatic ketone group.

The first (meth)acrylate copolymer is formed from a first reaction mixture that includes at least one alkyl (meth)acrylate monomer. The alkyl group can be linear (e.g., with 1 to 32 carbon atoms or 1 to 20 carbon atoms), branched (e.g., with 3 to 32 carbon atoms or 3 to 20 carbon atoms), cyclic (e.g., with 3 to 32 carbon atoms or 3 to 20 carbon atoms), or a combination thereof.

Exemplary alkyl (meth)acrylates include, but are not limited to, methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, 2-methylbutyl (meth)acrylate, n-hexyl (meth)acrylate, cyclohexyl (meth)acrylate, isobornyl (meth)acrylate, 4-methyl-2-pentyl (meth)acrylate, 2-ethylhexyl (meth)acrylate, 2-methylhexyl (meth)acrylate, n-octyl (meth)acrylate, isooctyl (meth) acrylate, 2-octyl (meth)acrylate, isononyl (meth)acrylate, isoamyl (meth)acrylate, n-decyl (meth)acrylate, isodecyl (meth) acrylate, 2-propylheptyl (meth)acrylate, isotridecyl (meth)acrylate, isostearyl (meth)acrylate, octadecyl (meth)acrylate, 2-octyldecyl (meth)acrylate, dodecyl (meth)acrylate, lauryl (meth)acrylate, and heptadecanyl (meth)acrylate. Some exemplary branched alkyl (meth)acrylates are (meth)acrylic acid esters of Guerbet alcohols having 12 to 32 carbon atoms as described in U.S. Patent No. 8,137,807 B2 (Clapper et al.). Various isomer mixtures of the alkyl (meth)acrylates can be used such as those described, for example, in U.S. Patent No. 9,102,774 B2 (Clapper et al.).

The amount of alkyl (meth)acrylate is often at least 70 weight percent of the monomers in the first reaction mixture. For example, the first reaction mixture can contain at least 75 weight percent, at least 80 weight percent, at least 85 weight percent, at least 90 weight percent, or at least 95 weight percent alkyl (meth)acrylate based on total moles of monomer in the first reaction mixture.

The first reaction mixture may optionally include hydroxy-containing monomers. Exemplary hydroxy-containing monomers include, but are not limited to, hydroxyalkyl (meth)acrylates (e.g., 2-hydroxyethyl (meth)acrylate, 2-hydroxypropyl (meth)acrylate, 3-hydroxypropyl (meth)acrylate, and 4-hydroxybutyl (meth)acrylate), hydroxyalkyl (meth)acrylamides (e.g., 2-hydroxyethyl (meth)acrylamide or 3-hydroxypropyl (meth)acrylamide), ethoxylated hydroxyethyl (meth) acrylate (e.g., monomers commercially available from Sartomer (Exton, PA, USA) under the trade designation CD570, CD571, and CD572), and aryloxy substituted hydroxyalkyl (meth)acrylates (e.g., 2-hydroxy-2-phenoxypropyl (meth) acrylate).

The amount of the hydroxy-containing monomers in the first reaction mixture is in a range of 0 to 10 weight percent based on a total weight of monomers in the first reaction mixture. The amount can be up 10 weight percent, up to 8 weight percent, up to 6 weight percent, up to 5 weight percent, up to 4 weight percent, up to 3 weight percent, up to 2 weight percent, or up to 1 weight percent. If present, the amount can be at least 0.1 weight percent, at least 0.2 weight percent, at least 0.5 weight percent, at least 1 weight percent, or at least 2 weight percent. The amount can be, for example, in a range of 1 to 10 weight percent, 0 to 5 weight percent, 1 to 5 weight percent, or 0 to 3 weight percent based on the total weight of monomers in the first reaction mixture. In some embodiments, the first reaction mixture is free or substantially free (e.g., less than 0.5 weight percent, less than 0.1 weight percent, less than 0.05 weight percent, or less than 0.01 weight percent) of hydroxy-containing monomers.

The first reaction mixture may optionally include other polar monomers other than hydroxy-containing monomers. That is, the first reaction mixture can contain non-hydroxy-containing polar monomers. Such monomers can have an acidic group, a primary amido group, a secondary amido group, a tertiary amido group, an amino group, or an ether group (i.e., a group containing at least one alkylene-oxy-alkylene group of formula -R-O-R- where each R is an alkylene having 1 to 4 carbon atoms). The polar group can be in the form of a salt. For example, the acidic group can be in the form of an anion and can have a cationic counter ion. In many embodiments, the cationic counter ion is an alkaline metal ion (e.g., sodium, potassium, or lithium ion), an alkaline earth ion (e.g., calcium, magnesium, or strontium ion), an ammonium ion, or an ammonium ion substituted with one or more alkyl or aryl groups. The various amido or amino groups can be in the form of a cation and can have an anionic counter ion. In many embodiments, the anionic counter ion is a halide, acetate, formate, sulfate, phosphate, or the like.

Exemplary polar monomers with an acidic group can be, for example, a carboxylic acid monomer, a phosphonic acid monomer, a sulfonic acid monomer, a salt thereof, or a combination thereof. Exemplary acidic monomers include, but are not limited to, (meth)acrylic acid, itaconic acid, fumaric acid, crotonic acid, citraconic acid, maleic acid, oleic acid, $\beta$-carboxyethyl acrylate, 2-(meth)acrylamidoethanesulfonic acid, 2-(meth)acrylamido-2-methylpropane sulfonic acid, vinylsulfonic acid, and the like. If present, the polar monomer having an acidic group is (meth)acrylic acid.

For pressure-sensitive adhesives for use in electronic devices, the monomer having an acidic group is often absent or present in a minimal amount so that its presence does not result in the corrosion or dissolution of metal-containing components that are included in such devices. In some embodiments, the first reaction mixture is free or substantially free (e.g., less than 0.5 weight percent, less than 0.1 weight percent, less than 0.05 weight percent, or less than 0.01 weight percent) of monomers having an acidic group.

Exemplary polar monomers with a primary amido group include (meth)acrylamide. Exemplary polar monomers with secondary amido groups include, but are not limited to, N-alkyl (meth)acrylamides such as N-methyl (meth) acrylamide, N-ethyl (meth)acrylamide, N-isopropyl (meth)acrylamide, N-tert-octyl (meth)acrylamide, or N-octyl (meth) acrylamide. Exemplary polar monomers with a tertiary amido group include, but are not limited to, N-vinyl caprolactam, N-vinyl-2-pyrrolidone, (meth)acryloyl morpholine, and N,N-dialkyl (meth)acrylamides such as N,N-dimethyl (meth)acrylamide, N,N-diethyl (meth)acrylamide, N,N-dipropyl (meth)acrylamide, and N,N-dibutyl (meth)acrylamide.

Polar monomers with an amino group include various N,N-dialkylaminoalkyl (meth)acrylates and N,N-dialkylaminoalkyl (meth)acrylamides. Examples include, but are not limited to, N,N-dimethyl aminoethyl (meth)acrylate, N,N-dimethylaminoethyl (meth)acrylamide, N,N-dimethylaminopropyl (meth)acrylate, N,N-dimethylaminopropyl (meth)acrylamide, N,N-diethylaminoethyl (meth)acrylate, N,N-diethylaminoethyl (meth)acrylamide, N,N-diethylaminopropyl (meth) acrylate, and N,N-diethylaminopropyl (meth)acrylamide.

Exemplary polar monomers with an ether group include, but are not limited to, alkoxylated alkyl (meth)acrylates such as ethoxyethoxyethyl (meth)acrylate, 2-methoxyethyl (meth)acrylate, and 2-ethoxyethyl (meth)acrylate; and poly(alkylene oxide) (meth)acrylates such as poly(ethylene oxide) (meth)acrylates and poly(propylene oxide) (meth) acrylates. The poly(alkylene oxide) acrylates are often referred to as poly(alkylene glycol) (meth)acrylates. These monomers can have any suitable end group such as a hydroxyl group or an alkoxy group. For example, when the end group is a methoxy group, the monomer can be referred to as methoxy poly(ethylene glycol) (meth)acrylate.

In many embodiments, the first reaction mixture includes a non-hydroxy-containing polar monomer having a basic group. These monomers are often nitrogen-containing monomers such as those with a primary amido group, secondary amido group, or amino group.

The optional non-hydroxy-containing polar monomer can be included in an amount up to 20 weight percent (i.e., 0 to 20 weight percent) based on total weight of monomer in the first reaction mixture. In many embodiments, this monomer is present in an amount up to 15 weight percent, up to 10 weight percent, or up to 5 weight percent based on total weight of monomer in the first reaction mixture. If present, the first reaction mixture often contains at least 0.5 weight percent, at least 1 weight percent, at least 2 weight percent, at least 3 weight percent, or at least 5 weight percent non-hydroxy-containing polar monomer. This monomer can be present, for example, in an amount in the range of 0.5 to 20 weight percent, 1 to 20 weight percent, 0 to 15 weight percent, 1 to 15 weight percent, 1 to 10 weight percent, or 1 to 5 weight percent based on the total weight of monomer in the first reaction mixture.

Any other optional monomers compatible with (e.g., miscible with) the monomers in the first reaction mixture can be included. Examples of other monomers include various aryl (meth)acrylate (e.g., phenyl (meth)acrylate), vinyl ethers, vinyl esters (e.g., vinyl acetate), olefinic monomers (e.g., ethylene propylene, or butylene), styrene, styrene derivatives (e.g., alpha-methyl styrene), and the like. Still other example monomers are aryl substituted alkyl (meth)acrylates or alkoxy substituted alkyl (meth)acrylates such as 2-biphenylhexyl (meth)acrylate, benzyl (meth)acrylate, and 2-phenoxy ethyl (meth)acrylate. In many embodiments the (meth)acrylate is an acrylate. The first reaction mixture typically does not include a monomer with multiple (meth)acryloyl groups or multiple vinyl groups.

The first reaction mixture can optionally include a UV crosslinking monomer having an aromatic ketone group that is crosslinkable when exposed to ultraviolet radiation. When exposed to UV radiation, the aromatic ketone groups can abstract a hydrogen atom from another polymeric chain or another portion of the same polymeric chain. This abstraction results in the formation of crosslinks between polymeric chains or within the same polymeric chain. In many embodiments, the aromatic ketone group is a derivative of benzophenone (i.e., a benzophenone-containing group). That is, the UV crosslinking monomers are often benzophenone-based monomers. Examples of UV crosslinking monomers include, but are not limited to, 4-(meth)acryloyloxybenzophenone, 4-(meth)acryloyloxyethoxybenzophenone, 4-(meth)acryloyloxy-4'-methoxybenzophenone, 4-(meth)acryloyloxyethoxy-4'-methoxybenzophenone, 4-(meth)acryloyloxy-4'-bromobenzophenone, 4-acryloyloxyethoxy-4'-bromobenzophenone, and the like.

The UV crosslinking monomer is often present in the first reaction mixture in an amount up to 5 weight percent (i.e., 0 to 5 weight percent) based on total weight of monomers in the first reaction mixture. In some examples, the UV crosslinking monomer can be up to 5 weight percent, up to 4 weight percent, up to 3 weight percent, up to 2 weight percent, or up to 1 weight percent. The amount is often limited when the polymerization reaction used to form the first (meth)acrylate copolymer is initiated by exposure to UV radiation. That is, the UV crosslinkable monomer can cause undesirable gelation during the polymerization process. When polymerized using a photoinitiator, the first reaction mixture may be free or substantially free (e.g., less than 0.1 weight percent, less than 0.05 weight percent, or less than 0.01 weight percent) of the UV crosslinking monomer based on total weight of monomers in the first reaction mixture.

Some first reaction mixtures include 70 to 100 weight percent alkyl (meth)acrylate, 0 to 10 weight percent hydroxy-containing monomer, 0 to 20 weight percent non-hydroxy-containing polar monomers, and 0 to 5 weight percent UV crosslinking monomer. In other examples, the first reaction mixtures include 75 to 99 weight percent alkyl (meth) acrylate, 0 to 10 weight percent hydroxy-containing monomer, 0 to 15 weight percent non-hydroxy-containing polar monomer, and 0 to 5 weight percent UV crosslinking monomer. In other examples, the first reaction mixtures include 85 to 99 weight percent alkyl (meth)acrylate, 0 to 5 weight percent hydroxy-containing monomer, 0 to 10 weight percent non-hydroxy-containing polar monomers, and 0 to 3 weight percent UV crosslinking monomer. In still other examples, the first reaction mixtures include 80 to 99 weight percent alkyl (meth)acrylate, 0 to 10 weight percent hydroxy-containing monomer, 0 to 10 weight percent non-hydroxy-containing polar monomer, and 0 to 5 weight percent UV crosslinking monomer. In yet other examples, the first reaction mixtures include 90 to 99 weight percent alkyl (meth)acrylate, 0 to 5 weight percent hydroxy-containing monomer, 0 to 5 weight percent non-hydroxy-containing polar monomers, and 0 to 1 weight percent UV crosslinking monomer. The amounts are based on total weight of monomers in the first reaction mixture.

In addition to the monomers, the first reaction mixture used to prepare the first (meth)acrylate copolymer typically includes a free radical initiator to commence polymerization of the monomers. The free radical initiator can be a photoinitator or a thermal initiator.

In many embodiments, the free radical initiator is a thermal initiator. Suitable thermal initiators include various azo compound such as those commercially available under the trade designation VAZO from Chemours (Wilmington, DE, USA) including VAZO 67, which is 2,2'-azobis(2-methylbutane nitrile), VAZO 64, which is 2,2'-azobis(isobutyronitrile), VAZO 52, which is (2,2'-azobis(2,4-dimethylpentanenitrile), and VAZO 88, which is 1,1'-azobis(cyclohexanecarbonitrile); various peroxides such as benzoyl peroxide, cyclohexane peroxide, lauroyl peroxide, di-tert-amyl peroxide, tert-butyl peroxy benzoate, di-cumyl peroxide, and peroxides commercially available from Atofina Chemical, Inc. (Philadelphia, PA) under the trade designation LUPERSOL (e.g., LUPERSOL 101, which is 2,5-bis(tert-butylperoxy)-2,5-dimethylhexane, and LUPERSOL 130, which is 2,5-dimethyl-2,5-di-(tert-butylperoxy)-3-hexyne); various hydroperoxides such as tert-amyl hydroperoxide and tert-butyl hydroperoxide; and mixtures thereof.

In some embodiments, a photoinitiator can be used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ, USA) or under the trade designation ESACURE KB-1 from Sartomer (Exton, PA, USA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl) oxime. Other suitable photoinitiators include, for example, 1-hydroxycyclohexyl phenyl ketone (commercially available under the trade designation IRGACURE 184), bis(2,4,6-trimethylbenzoyl)phenylphosphineoxide (commercially available under the trade designation IRGACURE 819), 1-[4-(2-hydroxyethoxy)phenyl]-2-hydroxy-2-methyl-1-propane-1-one (commercially available under the trade designation IRGACURE 2959), 2-benzyl-2-dimethylamino-1-(4-morpholinophenyl)butanone (commercially available under the trade designation IRGACURE 369), 2-methyl-1-[4-(methylthio)phenyl]-2-morpholinopropan-1-one (commercially available under the trade designation IRGACURE 907), and 2-hydroxy-2-methyl-1-phenyl propan-1-one (commercially available under the trade designation DAROCUR 1173 from Ciba Specialty Chemicals Corp. (Tarrytown, NY, USA).

The first reaction mixture may optionally further contain a chain transfer agent to control the molecular weight of the resultant (meth)acrylate copolymer. Examples of useful chain transfer agents include, but are not limited to, carbon tetrabromide, alcohols (e.g., ethanol and isopropanol), mercaptans or thiols (e.g., lauryl mercaptan, butyl mercaptan, ethanethiol, isooctylthioglycolate, 2-ethylhexyl thioglycolate, 2-ethylhexyl mercaptopropionate, ethyleneglycol bisthioglycolate), and mixtures thereof. If used, the polymerizable mixture may include up to 1.0 weight percent of a chain transfer agent based on a total weight of monomers. For example, the first reaction mixture can contain 0.005 to 1.0 weight percent, 0.01 to 1.0 weight percent, 0.01 to 0.7 weight percent, 0.01 to 0.5 weight percent, 0.01 to 0.2 weight percent or 0.01 to 0.1 weight percent chain transfer agent.

The polymerization of the first reaction mixture can occur in the presence or absence of an organic solvent. If an organic solvent is included in the polymerizable mixture, the amount is often selected to provide the desired viscosity. Examples of suitable organic solvents include, but are not limited to, methanol, ethanol, isopropanol, n-propanol, n-butanol, tetrahydrofuran, hexane, cyclohexane, heptane, acetone, methyl ethyl ketone, methyl acetate, ethyl acetate, toluene, xylene, and ethylene glycol alkyl ether (e.g., ethylene glycol methyl ether). These organic solvents can be used alone or as mixtures.

In many embodiments, the polymerization reaction occurs with little or no organic solvent present. That is the first reaction mixture is free of organic solvent or contains a minimum amount of organic solvent. If desired, an organic solvent can be added to control the viscosity of the first reaction mixture and/or to effectively remove the first (meth)acrylate copolymer from the reactor. If used, the organic solvent is often present in an amount up to or greater than 100 parts per hundred (100 pph) or more of the monomers. The amount can be up to 80 pph, up to 60 pph, up to 40 pph, up to 10 pph, or up to 5 pph. If used, any organic solvent typically is removed at the completion of the polymerization reaction.

Although any known method of forming (meth)acrylate copolymers can be used, in some embodiments it is desirable to minimize the use of organic solvents that will need to be removed later. One suitable method is to form the first (meth)acrylate copolymer within a polymeric pouch that has been purged to remove oxygen. When prepared in this manner, a photoinitiator is often used. This method, which is further described in U.S. Patent Nos. 5,804,610 (Hamer et al.)

and 6,294,249 (Hamer et al.), is particularly advantageous when the first (meth)acrylate copolymer is subsequently combined with the other components of the crosslinkable composition using hot melt processing methods.

Polymerization of the first reaction mixture in the presence of a photoinitiator such as those described above usually occurs upon exposure to UV radiation. Suitable UV sources often have at least 60 percent, at least 65 percent, at least 70 percent, or at least 75 percent of the emission spectra within the range of 280 to 400 nanometers and have an intensity within the range of 0.1 to 25 mW/cm$^2$. The temperature of the reaction mixture is often controlled by immersing the sealed polymeric pouch in a water bath or heat transfer fluid controlled at a temperature in a range of 5°C to 50°C, 5°C to 40°C, 5°C to 30°C, or 5°C to 20°C.

Polymerization in the presence of a thermal initiator can occur in a single step or in multiple steps. That is, all or a portion of the monomers and/or thermal initiator may be charged into a suitable reaction vessel and polymerized. In some embodiments, there is an initial charge of monomers and thermal initiator followed by partial polymerization. Polymerization is completed after the addition of any remaining monomers and/or thermal initiator. Multiple polymerization steps can help narrow the polydispersity of the polymerized product (e.g., the amount of low molecular weight chains can be reduced), can help minimize or control the heat of reaction, and can allow for adjustment of the type and amount of monomer available during polymerization. In some embodiments, polymerization occurs using an adiabatic process such as that described in U.S. Patent Nos. 5,986,011 (Ellis et al.) and 5,637,646 (Ellis).

Polymerization in the presence of a thermal initiator such as those described above occurs upon heating above room temperatures such as in a range of 30°C to 180°C. For example, the temperature can be at least 30°C, at least 40°C, at least 50°C, at least 60°C, at least 80°C, at least 100°C, at least 120°C, at least 140°C, or at least 150°C and up to 180°C, up to 160°C, up to 150°C, up to 140°C, up to 120°C, up to 100°C, up to 80°C, or up to 60°C.

The resulting product of the polymerization reaction is the first (meth)acrylate copolymer, which is a random copolymer. The first (meth)acrylate copolymer is the base polymeric material for the crosslinked composition. The weight average molecular weight is often in a range of 100,000 Daltons to 1,500,000 Daltons. The adhesive properties of the crosslinked composition tend to improve with an increase in the weight average molecular weight (Mw) of the first (meth) acrylate copolymer. If the weight average molecular weight is too great, however, the viscosity of the first (meth)acrylate copolymer may be too high for extruding the crosslinkable composition onto a substrate for preparation of an adhesive article. The first (meth)acrylate copolymer often has a weight average molecular weight equal to at least 100,000 Daltons, at least 150,000 Daltons, at least 200,000 Daltons, at least 250,000 Daltons, at least 300,000 Daltons, or at least 350,000 Daltons. The weight average molecular weight can be up to 1,500,000 Daltons, up to 1,200,000 Daltons, up to 1,000,000 Daltons, up to 800,000 Daltons, up to 600,000 Daltons, up to 500,000 Daltons, or up to 400,000 Daltons. The weight average molecular weight can be varied, for example, by altering the amount of chain transfer agent included in the first reaction mixture. The weight average molecular weight can be determined using Gel Permeation Chromatography as described more fully in the Examples section.

The first (meth)acrylate copolymer typically has a glass transition temperature no greater than 20°C, no greater than 10°C, no greater than 0°C, no greater than -10°C, or no greater than -20°C. The glass transition temperature is typically greater than -50°C. The glass transition temperature can be measured using Dynamic Mechanical Analysis as described in the Examples section.

Second (Meth)acrylate Copolymer

The second (meth)acrylate copolymer in the crosslinkable composition has a different composition and weight average molecular weight compared to the first (meth)acrylate copolymer. In particular, the second (meth)acrylate has a weight average molecular weight greater than 10,000 Daltons to less than 100,000 Daltons and is a reaction product of a second reaction mixture containing 1) an alkyl (meth)acrylate, 2) a hydroxy-containing monomer in an amount greater than 15 weight percent to 70 weight percent based on a total weight of monomers in the second reaction mixture, and 3) an optional UV crosslinking monomer having an aromatic ketone group.

The alkyl (meth)acrylates that are suitable for use in the second reaction mixture are the same as those described above for use in the first reaction mixture. The second reaction mixture can include up to 85 weight percent (e.g., typically less than 85 weight percent) alkyl (meth)acrylate based on total weight of monomer in the second reaction mixture. For example, the second reaction mixture can contain up to 80 weight percent, up to 75 weight percent, up to 70 weight percent, up to 65 weight percent, or up to 60 weight percent alkyl (meth)acrylate. The second reaction mixture contains at least 30 weight percent, at least 40 weight percent, at least 50 weight percent, at least 55 weight percent, at least 60 weight percent, at least 65 weight percent, at least 70 weight percent, or at least 75 weight percent of the alkyl (meth)acrylate. The amount of the alkyl (meth)acrylate in the second reaction mixture can be 30 to 85 weight percent (30 to less than 85 weight percent), 40 to 85 weight percent (40 to less than 85 weight percent), 50 to 85 weight percent (50 to less than 85 weight percent), 55 to 80 weight percent, 60 to 85 weight percent, 60 to 80 weight percent, 70 to 85 weight percent, or 75 to 85 weight percent based on the total weight of monomers in the second reaction mixture.

The second reaction mixture includes a hydroxy-containing monomer. Suitable hydroxy-containing monomers are the same as those described above for the first reaction mixture. The amount of the hydroxy-containing monomer in the second reaction mixture is greater than 15 weight percent to 70 weight percent based on the total weight of monomers in the second reaction mixture. The amount is often greater than 15 weight percent, at least 20 weight percent, at least 25 weight percent, at least 30 weight percent, at least 35 weight percent and up to 70 weight percent, up to 60 weight percent, up to 50 weight percent, up to 45 weight percent, up to 40 weight percent, up to 30 weight percent, or up to 25 weight percent. For example, the amount can be in a range of 20 to 70 weight percent, 20 to 60 weight percent, 20 to 50 weight percent, 25 to 50 weight percent, 30 to 50 weight percent, 20 to 40 weight percent, or 20 to 30 weight percent.

The hydroxy-containing monomeric units included in the second (meth)acrylate copolymer tend to enhance the performance and/or properties of the final crosslinked composition, which is typically a pressure-sensitive adhesive or heat bondable adhesive. First, increasing content of hydroxy-containing monomeric units tends to increase the dielectric constant of the crosslinked composition. The increased dielectric constant is desirable for use of the adhesive in electronic application such as, for example, electronic displays. Additionally, the adhesive strength tends to increase as the amount of hydroxy-containing monomeric units included in the second (meth)acylate copolymer increases. The use of hydroxy-containing monomeric units can increase the adhesive strength without the use of acidic groups that may adversely impact the lifetime of an electronic device through corrosion and/or dissolution of metal components. Still further, the hydroxy-containing monomeric units can influence the clarity of the crosslinked composition in high humidity environments such as at least 70 percent relative humidity. That is, the hydroxy-containing monomeric units can help reduce the amount of haziness that occurs when the crosslinked compositions are exposed to high humidity conditions. This reduction in haziness can be important for use of the adhesive in applications where clarity (including optical clarity) is important.

The amount of hydroxy-containing monomeric units in the second (meth)acrylate copolymer is higher than the amount of hydroxy-containing monomeric units in the first (meth)acrylate copolymer. If there is a large amount (e.g., greater than 10 weight percent) of hydroxy-containing monomeric units in the first (meth)acrylate copolymer, transesterification reactions are likely to occur at elevated temperatures (e.g., 170°C as shown in the Examples section). Transesterification reactions can occur during preparation of the first (meth)acrylate copolymer at elevated temperatures and/or when processing (e.g., extruding) the crosslinkable composition. Transesterification reactions tend to increase the viscosity of the first (meth)acrylate copolymer, leading to gel defect formation or unacceptable coating quality. This is due to crosslinking of polymer chains and the resulting increase in average molecular weight. While transesterification can occur within the second (meth)acrylate copolymer as well, the effect on viscosity of the crosslinkable composition is considerably less than with the first (meth)acrylate copolymer because of the lower molecular weight of the second (meth)acrylate copolymer and the comparatively lower amount of second (meth)acrylate copolymer in the crosslinkable composition. By placing most or all the hydroxy-containing monomeric units in the second (meth)acrylate copolymer rather than in the first (meth)acrylate copolymer, viscosity increase during processing can be avoided and defect free coatings are more readily achieved.

The second reaction mixture that is used to form the second (meth)acrylate copolymer can optionally include a UV crosslinking monomer such as those described above for use in the first reaction mixture. Even if the UV crosslinking monomer is included in the first (meth)acrylate copolymer, it can be absent or present in the second (meth)acrylate copolymer. Further, even if the UV crosslinking monomer is absent in the first (meth)acrylate copolymer, it can be absent or present in the second (meth)acrylate copolymer. If the UV crosslinking monomer is present in either the first or second (meth)acrylate copolymer, the crosslinked composition can be formed by exposure of the crosslinkable composition to UV radiation. If the UV crosslinking monomer is absent in both the first and second (meth)acrylate copolymers, the crosslinked composition can be formed by exposure of the crosslinkable composition to ionizing radiation.

The amount of the optional UV crosslinking monomer in the second reaction mixture is typically in a range of 0 to 10 weight percent based on a total weight of monomers in the second reaction mixture. For example, the UV crosslinking monomer can be present in an amount equal to at least 0.1 weight percent, at least 0.2 weight percent, at least 0.3 weight percent, at least 0.5 weight percent, at least 1 weight percent, at least 2 weight percent, or at least 3 weight percent and up to 10 weight percent, up to 8 weight percent, up to 6 weight percent, up to 5 weight percent, up to 4 weight percent, up to 3 weight percent, or up to 2 weight percent based on total weight of monomer in the second reaction mixture. In many embodiments, the second reaction mixture includes 0.1 to 10 weight percent, 0.2 to 10 weight percent, 0.1 to 8 weight percent, 0.1 to 5 weight percent, 0.2 to 5 weight percent, 0.3 to 5 weight percent, 0.5 to 5 weight percent, 0.5 to 4 weight percent, or 0.5 to 3 weight percent of the UV crosslinking monomer based on the total weight of monomers in the second reaction mixture.

The second reaction mixture can include other optional monomers such as those described above for the first reaction mixture. For example, the second reaction mixture can include a non-hydroxy-containing polar monomer. Any non-hydroxy-containing polar monomer described for use in the first reaction mixture can be used in the second reaction mixture.

The optional non-hydroxy-containing polar monomer can be included in an amount in a range of 0 to 20 weight percent based on total weight of monomers in the second reaction mixture. In many embodiments, this monomer is present in an amount up to 15 weight percent, up to 10 weight percent, or up to 5 weight percent based on total weight of monomer in the second reaction mixture. If present, the second reaction mixture often contains at least 0.5 weight percent, at least 1 weight percent, at least 2 weight percent, at least 3 weight percent, or at least 5 weight percent non-hydroxy-containing polar monomer. This monomer can be present, for example, in an amount in the range of 0.5 to 20 weight percent, 1 to 20 weight percent, 1 to 15 weight percent, 1 to 10 weight percent, or 1 to 5 weight percent based on the total weight of monomer in the second reaction mixture. In some embodiments, the second reaction mixture contains non-hydroxy-containing polar monomers with basic groups such as primary amido groups, secondary amido groups, or amino groups.

As with the first reaction mixture, any other optional monomers compatible with (e.g., miscible with) the monomers in the second reaction mixture can be included. Examples of other monomers include various aryl (meth) acrylate (e.g., phenyl (meth)acrylate), vinyl ethers, vinyl esters (e.g., vinyl acetate), olefinic monomers (e.g., ethylene propylene, or butylene), styrene, styrene derivatives (e.g., alpha-methyl styrene), and the like. Still other example monomers are aryl substituted alkyl (meth)acrylates or alkoxy substituted alkyl (meth)acrylates such as 2-biphenylhexyl (meth)acrylate, benzyl (meth)acrylate, and 2-phenoxy ethyl (meth)acrylate. In many embodiments the (meth)acrylate is an acrylate. The second reaction mixture typically does not include a monomer with multiple (meth)acryloyl groups or multiple vinyl groups.

Some exemplary second reaction mixtures contain up to 85 weight percent (e.g., typically less than 85 weight percent) alkyl (meth)acrylate and greater than 15 weight percent hydroxy-containing monomer based on total weight of monomer in the second reaction mixture. For example, the second reaction mixtures can contain 30 to less than 85 weight percent alkyl (meth)acrylate, greater than 15 to 70 weight percent hydroxy-containing monomers, 0 to 20 weight percent non-hydroxy-containing polar monomers, and 0 to 10 weight percent UV crosslinking monomer. In more specific examples, the second reaction mixture contains 50 to 80 weight percent alkyl (meth)acrylate, 20 to 50 weight percent hydroxy-containing monomer, 0 to 15 weight percent non-hydroxy-containing polar monomers, and 0.1 to 10 weight percent UV crosslinking monomer. In some even more specific examples, the second reaction mixture contains 55 to 75 weight percent alkyl (meth)acrylate, 25 to 45 weight percent hydroxy-containing monomer, 0 to 10 weight percent non-hydroxy-containing polar monomers, and 0.1 to 10 weight percent UV crosslinking monomer.

The second reaction mixture used to prepare the second (meth)acrylate copolymer typically includes a free radical initiator. As with the first reaction mixture, the free radical initiator can be either a thermal initiator or a photoinitiator. Suitable thermal initiators and photoinitiators for the second reaction mixture are the same as described above for the first reaction mixture. A thermal initiator is often selected if the second reaction mixture contains a UV crosslinking monomer. The unreacted UV crosslinkable groups can then be subsequently reacted when exposed to UV radiation in the presence of the first (meth)acrylate copolymer within the crosslinkable composition.

Other components can be added to the second reaction mixture used to form the second (meth)acrylate copolymer. In some embodiments, chain transfer agents such as those described above for use in the first reaction mixture can be added to control the molecular weight of the second (meth)acrylate copolymer. The amount of the chain transfer agent can be up to 8 weight percent, up to 6 weight percent, up to 4 weight percent, up to 2 weight percent, up to 1 weight percent, or up to 0.5 weight percent based on a total weight of monomers in the second reaction mixture. The amount is often at least 0.005 weight percent, at least 0.01 weight percent, at least 0.05 weight percent, at least 0.1 weight percent, at least 0.5 weight percent, or at least 1 weight percent based on the total weight of monomers.

In many embodiments, the polymerization reaction to form the second (meth)acrylate copolymer occurs with little or no organic solvent present. That is, the second reaction mixture is free of organic solvent or contains a minimum amount of organic solvent. If desired, an organic solvent can be added to control the viscosity of the second reaction mixture and/or to effectively remove the second (meth)acrylate copolymer from the reactor. Suitable organic solvents include those described above for use in the first reaction mixture. If used, the organic solvent is often present in an amount up to or greater than 100 parts per hundred (100 pph) or more of the monomers. The amount can be up to 80 pph, up to 60 pph, up to 40 pph, up to 10 pph, or up to 5 pph. If used, any organic solvent typically is removed at the completion of the polymerization reaction.

The second (meth)acrylate copolymer can be polymerized using any of the polymerization processes described above for preparation of the first (meth)acrylate copolymer.

The weight average molecular weight of the second (meth)acrylate copolymer is lower than the weight average molecular weight of the first (meth)acrylate copolymer. The lower molecular weight of the second (meth)acrylate copolymer can be used to minimize the impact of transesterification reactions on the overall viscosity of the crosslinkable composition. The second (meth)acrylate copolymer, which is a random copolymer, typically has a weight average molecular weight in a range of 10,000 to 100,000 Daltons. If the weight average molecular weight is too high, it will have a higher viscosity and may be more difficult to blend with the first (meth)acrylate copolymer. In some embodiments, the weight average molecular weight of the second (meth)acrylate copolymer is at least 10,000 Daltons, at least 20,000 Daltons, at least 30,000 Daltons, at least 40,000 Daltons, or at least 50,000 Daltons and up to 100,000 Daltons, up to 90,000 Daltons, up to 80,000 Daltons, up to 70,000 Daltons, up to 60,000 Daltons, or up to 50,000 Daltons. The weight average molecular weight can be varied, for example, by altering the amount of chain transfer agent included in the first reaction mixture. The weight average molecular weight can be determined using Gel Permeation Chromatography as described more fully in the Examples section.

The glass transition temperature of the second (meth)acrylate copolymer can vary to a greater extent than the first (meth)acrylate copolymer because it is present in a smaller amount and has a lower weight average molecular weight. The glass transition temperature can be up to 100°C, up to 80°C, up to 60°C, up to 50°C, up to 40°C, up to 30°C, or up to 25°C. The glass transition temperature is usually at least -50°C, at least -20°C, or at least 0°C.

<u>Overall Crosslinkable Composition</u>

The amount of the first (meth)acrylate copolymer in the crosslinkable composition is often in a range of 50 to 95 weight percent based on a total weight of polymeric material (e.g., the total weight of (meth)acrylate copolymers, which is typically the sum of the amount of the first (meth)acrylate copolymer and the second (meth)acrylate copolymer) in the crosslinkable composition). For example, the crosslinkable composition can include at least 50 weight percent, at least 55 percent, at least 60 weight percent, at least 65 weight percent, at least 70 weight percent, at least 75 weight percent, or at least 80 weight percent of the first (meth)acrylate copolymer. The amount of the first (meth)acrylate copolymer can be up to 95 weight percent, up to 90 weight percent, up to 85 weight percent, up to 80 weight percent, up to 75 weight percent, or up to 70 weight percent based on the total weight of polymeric materials in the crosslinkable composition.

The amount of the second (meth)acrylate copolymer in the crosslinkable composition is often in a range of 5 to 50 weight percent based on a total weight of polymeric material in the crosslinkable composition. For example, the crosslinkable composition can include at least 5 weight percent, at least 10 weight percent, at least 15 weight percent, at least 20 weight percent, or at least 25 weight percent of the second (meth)acrylate copolymer. The amount of the second (meth)acrylate copolymer can be up to 50 weight percent, up to 45 weight percent, up to 40 weight percent, up to 35 weight percent, or up to 30 weight percent based on the total weight of polymeric material in the crosslinkable composition.

In summary, the crosslinkable composition contains 50 to 95 weight percent of the first (meth)acrylate copolymer and 5 to 50 weight percent of the second (meth)acrylate copolymer based on the total weight of polymeric material in the crosslinkable composition. If the amount of the second (meth)acrylate copolymer is present in a lower amount, there may not be enough hydroxy-containing monomeric units in the overall crosslinkable composition to achieve the advantages associated with its presence. If the amount of the second (meth)acrylate copolymer is present in a higher amount, however, there may be incompatibility between the two (meth)acrylate copolymers as evidenced by a haze value greater than about 5 percent, greater than 4, or greater than 3. Measurement of haze is described more fully in the Examples section.

In some embodiments, the crosslinkable composition contains 50 to 90 weight percent of the first (meth)acrylate copolymer and 10 to 50 weight percent of the second (meth)acrylate copolymer based on the total weight of polymeric material in the crosslinkable composition. For example, the crosslinkable composition can contain 50 to 80 weight percent of the first (meth)acrylate copolymer and 20 to 50 weight percent of the second (meth)acrylate copolymer, or 50 to 70 weight percent of the first (meth)acrylate copolymer and 30 to 50 weight percent of the second (meth)acrylate copolymer.

In addition to the first (meth)acrylate copolymer and the second (meth)acrylate copolymer, the crosslinkable composition optionally includes a tackifier. The tackifier is typically selected to be miscible with the two (meth)acrylate copolymers. Either solid or liquid tackifiers can be added. Solid tackifiers generally have a number average molecular weight (Mn) of 10,000 Daltons or less and a softening point above about 70°C. Liquid tackifiers are viscous materials that have a softening point of about 0°C to about 70°C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the pressure-sensitive adhesive composition. Combinations of various tackifiers can be used, if desired. In many embodiments, the tackifier is a rosin ester or includes a rosin ester.

Tackifiers that are rosin esters are the reaction products of various rosin acids and alcohols. These include, but are not limited to, methyl esters of rosin acids, triethylene glycol esters of rosin acids, glycerol esters of rosin acids, and pentaertythritol esters of rosin acids. These rosin esters can be hydrogenated partially or fully to improve stability and reduce their color contribution to the pressure-sensitive adhesive composition. The rosin resin tackifiers are commercially available, for example, from Eastman Chemical Company (Kingsport, TN, USA) under the trade designations PERMALYN, STAYBELITE, and FORAL as well as from Newport Industries (London, England) under the trade designations NUROZ and NUTAC. A fully hydrogenated rosin resin is commercially available, for example, from Eastman Chemical Company under the trade designation FORAL AX-E. A partially hydrogenated rosin resin is commercially available, for example, from Eastman Chemical Company under the trade designation STAYBELITE-E.

Tackifiers that are hydrocarbon resins can be prepared from various petroleum-based feed stocks. These feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopenetadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color and thermal stability.

The C5-based hydrocarbon resins are commercially available from Eastman Chemical Company under the trade designations PICCOTAC and EASTOTAC, from Cray Valley (Exton, PA, USA) under the trade designation WINGTACK, from Neville Chemical Company (Pittsburg, PA, USA) under the trade designation NEVTAC LX, and from Kolon Industries, Inc. (South Korea) under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley (Exton, PA, USA) under the trade designations NORSOLENE, from Ruetgers N.V. (Belgium) under the trade designation NOVAREZ, and from Kolon Industries, Inc. (South Korea) under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREX that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa (Germany) under the trade designation ARKON, from Zeon Corporation (Japan) under the trade designation QUINTONE, from Exxon Mobile Chemical (Houston, TX) under the trade designation ESCOREZ, and from Newport Industries (London, England) under the trade designations NURES and H-REZ.

If present, the tackifier is often used in an amount equal to at least 5 weight percent based on a total weight of solids in the crosslinkable composition. As used herein, the term "solids" includes all materials other than water and organic solvents in the crosslinkable composition. The main contributors to the solids are the first (meth)acrylate copolymer, the second (meth)acrylate copolymer, and any optional tackifier. In some embodiments, the amount of tackifier is present in an amount of at least 5 weight percent, at least 10 weight percent, at least 15 weight percent, at least 20 weight percent, at least 25 weight percent, at least 30 weight percent, or at least 35 weight percent based on the total weight of solids in the crosslinkable composition. The amount of the tackifier can be up to 60 weight percent or even higher, up to 55 weight percent, up to 50 weight percent, up to 45 weight percent, or up to 40 weight percent based on the total weight of the solids in the crosslinkable composition. In some embodiments, the tackifier is present in an amount in a range of 0 to 60 weight percent, 5 to 60 weight percent, 10 to 60 weight percent, 20 to 60 weight percent, 30 to 60 weight percent, 10 to 50 weight percent, 20 to 50 weight percent, 30 to 50 weight percent, 20 to 45 weight percent, or 20 to 40 weight percent based on the total weight of solids in the crosslinkable composition.

In some applications, it can be advantageous to include an adhesion promoter in the crosslinkable composition to optimize performance of the adhesive composition. This additive can promote adhesion between the adhesive composition and the substrate. In many embodiments, the adhesion promoters have a first group that can interact with the substrate and a second group that can interact with a component of the crosslinkable composition. For example, the first group of the adhesion promoter that can interact with the substrate may have a silyl group of formula $-Si(R^a)_x(R^b)_{3-x}$ where $R^a$ is an alkoxy, $R^b$ is an alkyl, and x is 1, 2, or 3. Suitable alkyl and alkoxy groups for $R^a$ and $R^b$ often have 1 to 10, 1 to 6, or 1 to 4 carbon atoms. Comparable titaniumcontaining groups can be used in place of the silyl group. Such first groups are particularly useful for interacting with a substrate having silanol or hydroxy groups. In some embodiments, the second group of the adhesion promoter is a polymerizable group. The polymerizable group is generally a (meth)acryloyl group but vinyl and allyl groups may also be used. Alternatively, the second group can be a group that interacts with a monomeric unit in the first (meth)acrylate copolymer or the second (meth)acrylate copolymer. The interaction can include, for example, a chemical reaction, hydrogen bonding, an ionic interaction, or an acid-base interaction. An example of a suitable adhesion promoter is a silane such as (3-glycidyloxypropyl)trimethoxysilane that can react chemically with hydroxy-containing monomeric units in the crosslinkable composition and with the surface of a glass substrate.

Further optional components can be added to the crosslinkable composition such as, for example, heat stabilizers, antioxidants, antistatic agents, plasticizers, thickeners, fillers, pigments, dyes, colorants, thixotropic agents, processing aides, nanoparticles, fibers, and combinations thereof. Such additives, if present, usually contribute in total less than 10 weight percent, less than 5 weight percent, less than 3 weight percent, or less than 1 weight percent to the solids of the crosslinkable composition.

The first (meth)acrylate copolymer, the second (meth)acrylate copolymer, and any optional components such as a tackifier are blended together to form the crosslinkable composition. Any suitable method of blending these components together can be used. The blending method can be done in the presence or absence of an organic solvent. In many embodiments, it can be advantageous to form a crosslinkable composition free or substantially free of an organic solvent. As used in reference to the crosslinkable composition, the term "substantially free" means that the total solids of the crosslinkable composition is greater than 90 weight percent, greater than 95 weight percent, greater than 97 weight percent, greater than 98 weight percent, or greater than 99 weight percent based on a total weight of the crosslinkable composition.

In many embodiments, the blending step includes mixing the various components in a molten state. Such blending methods can be referred to as hot melt mixing methods or hot melt blending methods. Both batch and continuous mixing equipment can be used. Examples of batch methods for blending components of the crosslinkable composition include those using a BRABENDER (e.g., a BRABENDER PREP CENTER that is commercially available from C.W. Brabender Instruments, Inc. (South Hackensack, NJ, USA)) or BANBURY internal mixing and roll milling equipment, which is available from Farrel Co. (Ansonia, CN, USA). Examples of continuous mixing methods include single screw extruding, twin screw extruding, disk extruding, reciprocating single screw extruding, and pin barrel single screw extruding. Continuous methods can utilize distributive elements, pin mixing elements, static mixing elements, and dispersive elements such as MADDOCK mixing elements and SAXTON mixing elements.

A single piece or multiple pieces of hot melt mixing equipment may be used to prepare the crosslinkable compositions. In some embodiments, it may be desirable to use more than one piece of hot melt mixing equipment. For example, a first extruder such as a single screw extruder can be used to hot melt process the first (meth)acrylate copolymer contained within a thermoplastic pouch. The output of the first extruder can be fed into a second extruder such as a twin-screw extruder for hot melt mixing the first (meth)acrylate copolymer with the second (meth)acrylate copolymer, tackifier, or both. The output of the hot melt mixing process is a blended crosslinkable composition.

The blended or overall crosslinkable composition typically has a glass transition temperature that is up to 25°C if the crosslinked composition is a pressure-sensitive adhesive or up to 60°C if the crosslinked composition is a heat bondable adhesive. Suitable pressure-sensitive adhesives often have a glass transition temperature that is greater than -40°C, greater than -25°C, greater than -20°C, greater than -10°C, greater than 0°C and up to 25°C, up to 20°C, up to 15°C, up to 10°C, or up to 0°C. Suitable heat bondable adhesives often have a glass transition temperature that is greater than 25°C, greater than 30°C, greater than 35°C, greater than 40°C and up to 60°C, up to 50°C, or up to 40°C. In many embodiments, the overall crosslinkable composition has a glass transition temperature no greater than 30°C.

The blended crosslinkable composition can be applied as a coating to a substrate. If a batch apparatus is used, the hot melt blended crosslinkable composition can be removed from the apparatus and placed in a hot melt coater or extruder for coating onto a substrate. If an extruder is used, the hot melt blended crosslinkable composition can be directly extruded onto a substrate to form a coating.

Thus, in another aspect, an article is provided. The article includes a substrate and a layer of the crosslinkable composition positioned adjacent to the substrate. The crosslinkable composition is the same as described above and includes the first (meth)acrylate copolymer, the second (meth)acrylate copolymer, and any optional components such as a tackifier. As used herein, the term "adjacent" refers to a first layer positioned near the second layer. The first and second layers can be in contact or can be separated from each other by another layer. For example, a substrate can be positioned adjacent to the crosslinkable composition if the substrate contacts the crosslinkable composition or is separated from the crosslinkable composition by another layer such as a primer layer or surface modification layer that increases the adhesion of the crosslinkable composition to the substrate. The crosslinkable composition is typically applied as a coating to a major surface of the substrate and the article is a substrate coated with the crosslinkable composition.

The expressions "coating of the crosslinkable composition", "crosslinkable composition coating", "layer of the crosslinkable composition", "crosslinkable composition layer" and similar expressions are used interchangeably. Likewise, similar expressions for the crosslinked composition are used interchangeably.

Any suitable substrate can be used in the article. For example, the substrate can be flexible or inflexible and can be formed from a polymeric material, glass or ceramic material, metal, or combination thereof. Some substrates are polymeric films such as those prepared from polyolefins (e.g., polyethylene, polypropylene, or copolymers thereof), polyurethanes, polyvinyl acetates, polyvinyl chlorides, polyesters (polyethylene terephthalate or polyethylene naphthalate), polycarbonates, polymethyl(meth)acrylates (PMMA), ethylene-vinyl acetate copolymers, and cellulosic materials (e.g., cellulose acetate, cellulose triacetate, and ethyl cellulose). Other substrates are metal foils, nonwoven materials (e.g., paper, cloth, nonwoven scrims), foams (e.g., polyacrylic, polyethylene, polyurethane, neoprene). For some substrates, it may be desirable to treat the surface to improve adhesion to the crosslinked composition, crosslinked composition, or both. Such treatments include, for example, application of primer layers, surface modification layer (e.g., corona treatment or surface abrasion), or both.

In some embodiments, the substrate is a release liner. Release liners typically have low affinity for the crosslinkable composition or crosslinked composition. Exemplary release liners can be prepared from paper (e.g., Kraft paper) or other types of polymeric material. Some release liners are coated with an outer layer of a release agent such as a silicone-containing material or a fluorocarbon-containing material.

The crosslinkable composition coating can have any desired thickness that can be effectively crosslinked when exposed to ultraviolet radiation. In many embodiments, the crosslinkable composition coating has a thickness no greater than 20 mils (500 micrometers), no greater than 10 mils (250 micrometers), no greater than 5 mils (125 micrometers), no greater than 4 mils (100 micrometers), no greater than 3 mils (75 micrometers), or no greater than 2 mils (50 micrometers). The thickness is often at least 0.2 mils (5.0 micrometers) or at least 1 mil (25 micrometers). For example, the thickness of the crosslinkable composition coating can be in the range of 0.5 mils (12.5 micrometers) to 20 mils (500 micrometers), in the range of 0.5 mils (12.5 micrometers) to 10 mils (250 micrometers), in the range of 0.5 mils (12.5 micrometers) to 5 mils (125 micrometers), in the range of 1 mil (25 micrometers) to 3 mils (75 micrometers), or in the range of 1 mil (25 micrometers) to 2 mils (50 micrometers).

Crosslinked Compositions and Articles

In other aspects, a crosslinked composition and an article containing the crosslinked composition are provided. The crosslinked composition is the reaction product of a crosslinkable composition exposed either to ultraviolet radiation or ionizing radiation. The article includes a substrate and a crosslinked composition layer positioned adjacent to the substrate. The substrate and the crosslinkable composition used to form the crosslinked composition are the same as described above.

If the first (meth)acrylate copolymer and/or the second (meth)acrylate copolymer contains UV crosslinking monomeric units, crosslinking of the crosslinkable composition can occur upon exposure to UV radiation. Suitable ultraviolet radiation crosslinking includes exposure of the crosslinkable composition to a UV light source. Such light sources can be either 1) relatively low light intensity sources such as blacklights or 2) relatively high light intensity sources such as mercury vapor lamps. Blacklights usually provide 10 mW/cm$^2$ or less (as measured in accordance with procedures approved by the United States National Institute of Standards and Technology as, for example, with a UVIMAP™ UM 365 L-S radiometer manufactured by Electronic Instrumentation & Technology, Inc., in Sterling, VA) over a wavelength range of 280 to 400 nanometers. Medium pressure mercury lamps often provide intensities generally greater than 10 mWatts/cm$^2$, preferably between 15 and 450 mWatts/cm$^2$. The total UV dosage is often in a range of 0.1 to 10 Joules/cm2.

If the first (meth)acrylate copolymer and the second (meth)acrylate copolymer are free or substantially free of UV crosslinking monomeric units, crosslinking of the crosslinkable composition can occur upon exposure to ionizing radiation. Non-limiting examples of ionizing radiation include alpha, beta, gamma, electron-beam, and x-ray radiation. Of these sources of ionizing radiation, electron-beam irradiation and gamma irradiation are preferred. Low voltage sources of electron-beam radiation are commercially available from Energy Sciences Inc., PCT Industries and Advanced Electron Beam (AEB). Sources of gamma irradiation are commercially available from Atomic Energy of Canada, Inc. using a cobalt-60 high-energy source. Ionizing radiation dosages are measured in kilograys (kGy). Doses of ionizing radiation can be administered in a single dose of the desired level of ionizing radiation or in multiple doses which accumulate to the desired level of ionizing radiation. The dosage of ionizing radiation cumulatively can range from about 25 kGy to about 400 kGy and preferably from about 25 kGy to about 200 kGy.

The crosslinked composition is typically a pressure-sensitive adhesive or a heat bondable adhesive. Thus, articles with a layer of the crosslinked composition can be used for many applications typical of pressure-sensitive adhesive articles and heat bondable adhesive articles. The substrate adjacent to the adhesive layer can be selected depending on the particular use or application. For example, the substrate can be a sheeting material and the resulting article can provide decorative graphics or can be a reflective product. In other examples, the substrate can be label stock (the resulting article is a label with an adhesive layer) or tape backing (the resulting article is an adhesive tape). In yet other examples, the substrate can be a release liner and the resulting article can be a transfer tape. The transfer tape can be used to transfer the pressure-sensitive adhesive layer to another substrate or surface. Other substrates and surfaces include, for example, a panel (e.g., a metal panel such as an automotive panel), glass (e.g., such as a window), or a component of an electronic device such as an electronic display.

Some articles are adhesive tapes. The adhesive tapes can be single-sided adhesive tapes with the crosslinkable composition attached to a single side of the tape backing or can be double-sided adhesive tape with a pressure-sensitive adhesive layer on both major surfaces of the tape backing. At least one of the two adhesive layers is the crosslinkable composition described above. Double-sided adhesive tapes are often carried on a release liner.

In yet another aspect, a method of preparing an article is provided. The method includes providing a substrate, positioning a crosslinkable composition adjacent to the substrate, and then exposing the crosslinkable composition to ultraviolet light or ionizing radiation to form a crosslinked composition. The crosslinkable composition is the same as described above.

In many embodiments of this method, the crosslinkable composition is positioned adjacent to the substrate by extruding the crosslinkable composition in a molten state. The various components of the crosslinkable composition are mixed together as a hot melt prior to extrusion. That is, the substrate is coated with the hot melt blended crosslinkable composition that exits the extruder. The extruded coating of the crosslinkable composition can be crosslinked upon exposure to UV radiation or ionizing radiation. Such methods allow the separation of the coating process from the crosslinking reactions needed to provide the good cohesive strength and shear holding power.

The coating process can be performed using (meth)acrylate copolymers that have little or no crosslinking. Such polymeric materials can easily flow under the typical hot melt processing conditions. Hot melt processing advantageously typically uses no organic solvents or minimal organic solvents. Thus, such processing methods are environmentally desirable. Using no organic solvent can also enable processing efficiencies and higher throughput by eliminating the time and equipment (ovens) need to evaporate the solvent from the coating. Moreover, thicker coatings can be achieved without the need for extended drying time, or the formation of bubbles with in the coating.

## Examples

Unless otherwise noted, all parts, percentages, ratios, etc. in the Examples and the rest of the specification are by weight. Unless otherwise indicated, all other reagents were obtained, or are available from fine chemical vendors such as Sigma-Aldrich Company, St. Louis, Missouri, or may be synthesized by known methods. The following abbreviations may be used in this section: min = minutes, s = second, g = gram, mg = milligram, kg = kilogram, m = meter, centimeter = cm, mm = millimeter, $\mu$m = micrometer or micron, °C = degrees Celsius, °F = degrees Fahrenheit, N = Newton, oz = ounce, Pa = Pascal, MPa = mega Pascal, rpm = revolutions per minute, pph = parts per hundred, psi = pressure per square inch, cc/rev = cubic centimeters per revolution, $cm^3$ = centimeters cubed, Hz = Hertz, kHz = kilo Hertz, RH = relative humidity, $\mu$L = microliter, L = liter, mL = milliliter, mol = mole, kDa = kilo Dalton, $J/cm^2$ = Joules per square centimeter, kGy = kilogray , Mz = z-average molecular weight

Table 1 (below) lists materials used in the examples and their sources.

Table 1: Material List

| DESIGNATION | DESCRIPTION |
|---|---|
| nBA | n-butyl acrylate, obtained from Sigma-Aldrich, St. Louis, MO |
| 2EHA | 2-Ethylhexyl acrylate, obtained from Sigma-Aldrich, St. Louis, MO |
| IBOA | Isobornyl acrylate, obtained from Sigma-Aldrich, St. Louis, MO |
| HPA | Hydroxypropyl acrylate, obtained from San Esters Corp., New York, NY |
| Acm | Acrylamide, obtained from Alfa Aesar, Haverhill, MA |
| AEBP | Acryloylethoxy benzophenone, made using a procedure similar to that described in U.S. Patent No. 4,737,559 (Kellen et al.) |
| VAZO 52 | 2,2'-Azobis(2,4-dimethylpentanenitrile), obtained under the trade designation "VAZO 52" from Chemours, Wilmington, DE |
| IOTG | Isooctyl thioglycolate, obtained from TCI America, Portland, OR |
| MEK | Methyl ethyl ketone, obtained from Sigma-Aldrich, St. Louis, MO |
| GPTMS | (3-Glycidyloxypropyl)trimethoxysilane, obtained from Alfa Aesar, Haverhill, MA |

## TEST PROCEDURES

### Molecular Weight Analysis Using GPC

The molecular weight distribution of the compounds was characterized using conventional gel permeation chromatography (GPC). The GPC instrumentation was obtained from Waters Corporation (Milford, MA), and included a high-pressure liquid chromatography pump (Model 1515HPLC), an auto-sampler (Model 717), a UV detector (Model 2487), and a refractive index detector (Model 2410). The chromatograph was equipped with two 5-micron PL gel MIXED-D columns obtained from Varian Inc. (Palo Alto, CA).

Samples of polymeric solutions were prepared by dissolving polymer or dried polymer samples in tetrahydrofuran at a concentration of 0.5 percent (weight/volume) and filtering through a 0.2-micron polytetrafluoroethylene filter that is available from VWR International (West Chester, PA). The resulting samples were injected into the GPC and eluted at a rate of 1 milliliter per minute through the columns maintained at 35°C. The system was calibrated with polystyrene standards using a linear-least squares analysis to establish a calibration curve. The weight average molecular weight (Mw) and the polydispersity index (weight average molecular weight (Mw) divided by number average molecular weight (Mn)) were calculated for each sample against this standard calibration curve.

The molecular weight can be reported as Mw, Mn, or Mz where each is determined according to the equations below where $N_i$ is the number of molecules of molecular mas $M_i$.

$$M_n = \frac{\sum M_i N_i}{\sum N_i}, \qquad M_w = \frac{\sum M_i^2 N_i}{\sum M_i N_i}, \qquad M_z = \frac{\sum M_i^3 N_i}{\sum M_i^2 N_i}$$

*Dynamic Mechanical Analysis Test*

The storage modulus (G') and glass transition temperature ($T_g$) were measured via dynamic mechanical analysis (DMA) in shear mode on a DHR-3 rheometer obtained from TA Instruments (New Castle, DE), equipped with 8 mm parallel plates. DMA samples were prepared by laminating the cured adhesive coatings to a thickness of $1.0 \pm 0.2$ mm. The DMA samples were ramped from 35°C to -50°C at a rate of -3°C/min, with a strain of 2% and a strain rate of 1 Hz. G' at 25°C was taken from the temperature ramp data, and $T_g$ was taken as the temperature where the peak in Tan $\delta$ occurred during the temperature ramp.

*Peel Adhesion Test*

Peel adhesion is the force required to remove a coated flexible sheet material from a test panel measured at a specific angle and rate of removal. In the examples of this invention, the peel force is expressed in Newtons per width of coated sheet (Newtons/cm). For each test, a 1 cm width of the adhesive, which was coated between two release liners with a dried thickness of 100 $\mu$m, was cut to approximately 15 cm in length. The first liner was peeled away, and the adhesive was laminated to a 51 $\mu$m (2-mil) thick plasma treated PET film obtained from 3M (St. Paul, MN). Then the second release liner was removed, and the adhesive-PET construction was laminated to a float glass plate that had been cleaned by wiping with isopropyl alcohol and allowed to air dry for several minutes. A 2 kg (4.5 pound) rubber roller was rolled over the strip three times in each direction (total of six passes) to adhere it to the glass plate. The samples dwelled for 24 hours at 25°C and 50 percent RH prior to testing. To execute the peel test, the free end of the adhesive coated PET strip was doubled back so that the angle of removal from the glass plate was 180 degrees. The free end was attached to the stationary clamp arm of an IMASS SP-2100 peel tester obtained from IMASS Inc. (Accord, MA). The glass plate was then affixed to the platform of the peel tester which is mechanized to move at a controlled rate away from the stationary clamp. The peel rate used was 6 cm/min. The peel force for each test was taken as the average over a 20-second peel duration, following a 4-second delay from the start of the peel motion. The reported values are averages of five replicate tests per sample.

*Haze Measurements*

Percent haze was measured with a spectrophotometer obtained under the trade designation "HUNTER LAB ULTRASCAN PRO" from Hunter Associates Laboratory, Inc. (Reston, VA). Measurements were made in transmission mode using the Easy Match QC software. Samples were prepared by laminating a piece of 100 $\mu$m thick adhesive coating approximately 70 mm by 40 mm to a 50 mm by 75 mm by 0.7 mm Eagle XG LCD glass substrate from Corning (Corning, NY). The photosensor was calibrated following the manufacturer's standardization procedure prior to testing each sample set. A clean piece of LCD glass substrate without adhesive was run as a standard blank. The reported percent haze values are averages of two measurements taken on separate locations of each sample.

*Dielectric Constant Measurements*

The dielectric constant at 100 kHz was analyzed via dielectric spectroscopy. Samples were prepared by laminating the adhesive coatings to a thickness of 300 $\mu$m. The dielectric property measurements were performed with an Alpha-A High Temperature Broadband Dielectric Spectrometer modular measurement system from Novocontrol Technologies Gmbh (Montabaur, Germany). All testing was performed in accordance with the ASTM D150 test standard. Surfaces without adhesive were painted with copper or silver paint. Surfaces with adhesive were laminated directly on the brass electrode without any copper or silver paint. The decision to apply a conformal conductive electrode depended on how well the samples were able to conform to the electrode surface. The Novocontrol ZGS Alpha Active Sample Cell was implemented once each sample was placed between two optically polished brass disks (diameter 40.0 mm and thickness 2.00 mm). The reported values are averages of three replicates per sample and are taken at a frequency of 100 kHz at ambient temperature.

*Heat Aging Analysis*

Approximately 100 milligrams of uncured first (meth)acrylate copolymer or blend of the first and second (meth) acrylate copolymers were placed in a glass vial and heated at 170°C, under vacuum for 30 minutes. The samples were then dissolved at 0.5 percent (weight/volume) in tetrahydrofuran, filtered through a 0.2 $\mu$m polytetrafluoroethylene syringe filter obtained from VWR International (West Chester, PA), and the molecular weight was analyzed via GPC. The instrument was an Agilent 1100 GPC obtained from Agilent Technologies (Santa Clara, CA), equipped with a differential refractive index detector. The column set was an Agilent PLGel Mixed B and C, (2 x 300 x 7.8 mm I.D) with a column heater set at 40°C. The injection volume was 60 $\mu$L and the eluent was tetrahydrofuran with a flow rate of 1.0 mL/min. The molecular weight calculations were based upon a calibration made of narrow dispersity polystyrene molecular weight standards ranging in molecular weight from 6,570 to 0.580 kg/mol. The calculations were performed using Agilent GPC/SEC software from Agilent Technologies. The data is reported as Mz because Mz tends to be heavily influenced by the higher molecular mass chains in the sample. That is, Mz can be a useful indicator of the higher molecular mass chains that form if transesterification is taking place in the samples at elevated temperatures.

## PREPARATION OF FIRST AND SECOND (METH)ACRYLATE COPOLYMERS

The first and second (meth)acrylate copolymers were prepared according to the compositions in Tables 2 and 3 using the following general procedure. The monomers, solvent, initiator, and chain transfer agent according to Table and Table were combined in a glass bottle. The monomer solutions were purged with nitrogen, and then quickly sealed. The bottles were then agitated in a 60°C water bath for 24 hours. In Tables 2 and 3, "pph" means parts per hundred relative to the total mass of monomers (e.g., nBA, 2EHA, IBOA, HPA, and Acm) in each sample. In the tables and elsewhere, "P1" refers to the first (meth)acrylate copolymer and "P2" refers to the second (meth)acrylate copolymer.

Table 2: Preparation of high molecular weight first (meth)acrylate copolymers (P1)

|  | nBA (wt-%) | 2EHA (wt-%) | IBOA (wt-%) | HPA (wt-%) | Acm (wt-%) | AEBP (pph) | VAZO 52 (pph) | MEK (pph) | Mw (kDa) |
|---|---|---|---|---|---|---|---|---|---|
| P1-1 | 40 | 40 |  | 15 | 5 | 0.2 | 0.1 | 100 | 276 |
| P1-2 | 47.5 | 47.5 |  |  | 5 | 0.2 | 0.1 | 100 | 267 |
| P1-3 | 42.5 | 42.5 | 10 |  | 5 | 0.2 | 0.1 | 100 | 246 |
| P1-4 | 47.5 | 47.5 |  |  | 5 |  | 0.1 | 100 | 213 |

Table 3: Preparation of low molecular weight second (meth)acrylate copolymers (P2)

|  | nBA (%) | HPA (%) | AEBP (pph) | VAZO 52 (pph) | IOTG (pph) | MEK (pph) | Mw (kDa) |
|---|---|---|---|---|---|---|---|
| P2-1 | 60 | 40 | 0.5 | 0.1 | 2.0 | 100 | 20.5 |
| P2-2 | 70 | 30 | 0.5 | 0.1 | 2.0 | 100 | 22.3 |
| P2-3 | 90 | 10 | 1 | 0.1 | 4.0 | 100 | 11.1 |
| P2-4 | 100 |  | 1 | 0.1 | 4.0 | 100 | 11.3 |
| P2-5 | 70 | 30 | 3 | 0.1 | 6.0 | 100 | 7.4 |
| P2-6 | 50 | 50 | 3 | 0.1 | 6.0 | 100 | 7.1 |
| P2-7 | 60 | 40 |  | 0.1 | 2.0 | 100 | 22.8 |

## EXAMPLE PREPARATION

Examples 1-6 (E1-E6) and Comparative Examples 1-6 (CE1-CE6) are summarized in Table 4 with preparations described below. The selected polymer solutions of the first (meth)acrylate copolymers (e.g., P1-1 to P1-4) and of the second (meth)acrylate copolymer (e.g., P2-1 to P2-7) were place in a glass jar. In addition, 0.1 pph (relative to the total weight of the first (meth)acrylate copolymer (P1) and second (meth)acrylate copolymer (P2)) of GPTMS was added to each sample as an adhesion promoter. After addition of all the components, the jars were rolled for at least 12 hours prior to coating.

The sample solutions were coated via knife coater onto a 75 $\mu$m PET liner with release coating (RF22N obtained from SKC Haas, Korea) and dried for 15 minutes at room temperature, followed by 30 minutes at 70°C. The dry thickness of all the sample coatings was 100 $\mu$m = 10 $\mu$m. Following drying, a second liner (RF02N obtained from SKC Haas, Korea) was laminated on top of the sample coatings.

The sample coatings were cured by exposing them to either UV or electron beam (e-beam) radiation to form the crosslinked adhesive coatings. In the case of UV curing, the sample coatings were irradiated through the second liner using a Fusion UV processor obtained from Fusion UV Systems, Inc. (Gaithersburg, MD), equipped with a D-bulb. The system settings were selected to provide a total UVA energy dosage of 3 J/cm$^2$, as calibrated using a Power Puck II UV radiometer from EIT (Leesburg, VA). For e-beam curing, the sample coatings were irradiated through the second liner using a CB-300 ELECTROCURTAIN e-beam system from Energy Sciences, Inc. (Wilmington, MA). The current setting was 240 kV, and the total radiation dosage to the samples was 90 kGy.

Table 4: Composition of adhesive coatings

| Example | P1 | P2 | P2 loading (wt-%) | Total OH-monomer (wt-%) | Cure method |
|---------|------|------|------|------|--------|
| CE1 | P1-1 | - | - | 15 | UV |
| CE2 | P1-2 | - | - | 0 | UV |
| CE3 | P1-3 | - | - | 0 | UV |
| E1 | P1-2 | P2-1 | 30 | 12 | UV |
| E2 | P1-2 | P2-2 | 30 | 9 | UV |
| CE4 | P1-2 | P2-3 | 30 | 3 | UV |
| CE5 | P1-2 | P2-4 | 30 | 0 | UV |
| E3 | P1-3 | P2-1 | 30 | 12 | UV |
| CE6 | P1-4 | - | - | 0 | e-beam |
| E4 | P1-4 | P2-7 | 15 | 6 | e-beam |
| E5 | P1-2 | P2-5 | 30 | 9 | None |
| E6 | P1-2 | P2-6 | 30 | 15 | None |

Table 5: Performance properties of adhesive coatings

| Example | G' (at 25°C (kPa) | $T_g$ (°C) | Haze % | 180° peel from glass (at 25°C (N/cm)) | Dk (at 100 kHz) |
|---------|------|------|------|------|------|
| CE1 | 75 | -13.4 | 0.19 | 7.2 | 4.55 |
| CE2 | 53 | -22.6 | 0.21 | 4.9 | 4.20 |
| CE3 | 78 | -14.1 | 0.14 | 6.6 | 3.78 |
| E1 | 32 | -21.1 | 3.2 | 7.8 | 4.75 |
| E2 | 28 | -24.8 | 0.5 | 6.3 | 4.72 |
| CE4 | 24 | -33.5 | 0.46 | 4.4 | 4.68 |
| CE5 | 26 | -29.1 | 1.63 | 3.3 | 4.69 |
| E3 | 44 | -16.6 | 0.23 | 8.2 | 4.66 |
| CE6 | 78 | -19.5 | 0.15 | 5.4 | 4.11 |
| E4 | 53 | -13.7 | 1.56 | 6.8 | 4.44 |

Table 4 shows the composition and Table 5 shows the performance properties of the adhesive coatings.

The percent haze for the example adhesives in Table 5 are generally low, (e.g., less than $\leq$ 3 percent), indicating that these adhesives could be utilized in applications requiring high optical clarity. Comparing CE-1 and CE-2, there is a significant drop in peel force when HPA is removed from the base copolymer (i.e., first (meth)acrylate copolymer P1) formulation. However, blending P1-2 with HPA containing second (meth)acrylate copolymers P2-1 and P2-2 (Examples 1 and 2) boosts the peel force back to values close to or greater than to CE-1. The adhesion benefit is correlated with the amount of hydroxyalkyl acrylate in the second (meth)acrylate copolymer P2. As can be seen for CE4 and CE5 in Table 4, P2-3 and P2-4 with low hydroxy content do not provide an adhesion increase when blended with P1-2. The adhesion benefit is also exemplified with E3, which is a blend of P1-3 and P2-1.

Consistent with peel adhesion, the Dk of the base copolymers (i.e., first (meth)acrylate copolymers P1) decreases significantly as HPA is removed from the formulation. Likewise, the Dk is increased utilizing the strategy of blending the first (meth)acrylate copolymer (e.g., P1-2 and P1-3) with the example second (meth)acrylate copolymers (P2-1 and P2-2) to generate Example 1 to Example 3. The Dk for the example blends are higher than that of CE1, even at a lower overall HPA content.

CE6 and E4 show that similar performance benefits are realized for e-beam curing as for UV curing.

Table 6: Molecular weight (Mz) change for P1 and P2 with high temperature (170°C) exposure

| Example | P1 initial Mz (kDa) | P1 post heat Mz (kDa) | P1 Mz % change | P2 initial Mz (kDa) | P2 post heat Mz (kDa) | P2 Mz % change |
|---|---|---|---|---|---|---|
| CE1 | 582 | 692 | 19 | - | - | - |
| CE2 | 561 | 546 | -3 | - | - | - |
| E1 | 586 | 604 | 3 | 30.4 | 30.7 | 1 |
| E2 | 582 | 605 | 4 | 31.2 | 31.1 | 0 |
| E5 | 577 | 589 | 2 | 12.2 | 12.2 | 0 |
| E6 | 571 | 613 | 7 | 11.9 | 12.5 | 5 |

Table 6 shows the change in molecular weight for the adhesives after high temperature exposure. The molecular weight values in Table 6 show little to no overall change in molecular weight with high temperature exposure for HPA-free CE-2 while HPA-containing CE-1 increased by 19 percent. Neither of these two comparative samples included a second (meth)acrylate copolymer. Examples containing the second (meth)acrylate copolymer had a smaller molecular weight increase upon aging compared to CE1. At high temperatures, the hydroxyalkyl monomers can participate in transesterification reactions with the other alkyl acrylate monomers of the copolymers, resulting in crosslinking. By incorporating the hydroxyalkyl acrylate monomers in the lower molecular weight second (meth)acrylate copolymer the system seems able to accommodate more crosslinking events before a detrimental increase in molecular weight is observed. Thus, the example blends with hydroxy-containing monomers in the second (meth)acrylate copolymer should be more thermally robust and amenable to hot melt extrusion coating than first (meth)acrylate copolymers with comparable amounts of hydroxy-containing monomers.

Claims

1. A crosslinkable composition comprising:

   a) 50 to 95 weight percent of a first (meth)acrylate copolymer based on a total weight of polymeric material in the crosslinkable composition, the first (meth)acrylate copolymer having a weight average molecular weight in a range of 100,000 Daltons to 1,500,000 Daltons, wherein the first (meth)acrylate copolymer is a reaction product of a first reaction mixture comprising

      1) an alkyl (meth)acrylate;
      2) 0 to 10 weight percent of an optional hydroxy-containing monomer based on a total weight of monomers in the first reaction mixture; and
      3) an optional UV crosslinking monomer having an aromatic ketone group; and

   b) 5 to 50 weight percent of a second (meth)acrylate copolymer based on the total weight of polymeric material in the crosslinkable composition, the second (meth)acrylate copolymer having a weight average molecular weight greater than 10,000 to less than 100,000 Daltons, wherein the second (meth)acrylate copolymer is a reaction product of a second reaction mixture comprising

      1) an alkyl (meth)acrylate; and
      2) greater than 15 to 70 weight percent hydroxy-containing monomer based on a total weight of monomer in the second reaction mixture;
      3) an optional UV crosslinking monomer having an aromatic ketone group wherein the weight average molecular weight is measured with the method according to the description.

2. The crosslinkable composition of claim 1, wherein the first (meth)acrylate copolymer has a weight average molecular weight in a range of 100,000 to 500,000 Daltons wherein the weight average molecular weight is measured with the method according to the description.

3. The crosslinkable composition of claim 1 or 2, wherein the second (meth)acrylate copolymer has a weight average molecular weight in a range of 10,000 to 80,000 Daltons wherein the weight average molecular weight is measured with the method according to the description.

4. The crosslinkable composition of any one of claims 1 to 3, wherein the first reaction mixture comprises 70 to 100 weight percent alkyl (meth)acrylate, 0 to 10 weight percent hydroxy-containing monomer, 0 to 20 weight percent non-hydroxy-containing polar monomers, and 0 to 5 weight percent UV crosslinking monomer based on the total weight of monomers in the first reaction mixture.

5. The crosslinkable composition of any one of claims 1 to 4, wherein the second reaction mixture comprises 30 to less than 85 weight percent alkyl (meth)acrylate, greater than 15 to 70 weight percent hydroxy-containing monomers, 0 to 20 weight percent non-hydroxy-containing polar monomer, and 0 to 10 weight percent UV crosslinking monomer based on the total weight of monomers in the second reaction mixture.

6. The crosslinkable polymeric composition of any one of claims 1 to 5, further comprising a tackifier in an amount in a range of 5 to 60 weight percent based on a total weight of solids in the crosslinkable composition.

7. The crosslinkable polymeric composition of any one of claims 1 to 6, wherein the glass transition temperature is no greater than 30°C wherein the glass transition temperature is measured with the method according to the description.

8. A crosslinked composition comprising a reaction product of a crosslinkable composition exposed to ultraviolet radiation or ionizing radiation, wherein the crosslinkable composition comprises

    a) 50 to 95 weight percent of a first (meth)acrylate copolymer based on a total weight of polymeric material in the crosslinkable composition, the first (meth)acrylate copolymer having a weight average molecular weight in a range of 100,000 Daltons to 1,500,000 Daltons, wherein the first (meth)acrylate copolymer is a reaction product of a first reaction mixture comprising

        1) an alkyl (meth)acrylate;
        2) 0 to 10 weight percent of an optional hydroxy-containing monomer based on a total weight of monomers in the first reaction mixture; and
        3) an optional UV crosslinking monomer having an aromatic ketone group; and

    b) 5 to 50 weight percent of a second (meth)acrylate copolymer based on the total weight of polymeric material in the crosslinkable composition, the second (meth)acrylate copolymer having a weight average molecular weight greater than 10,000 to less than 100,000 Daltons, wherein the second (meth)acrylate copolymer is a reaction product of a second reaction mixture comprising

        1) an alkyl (meth)acrylate; and
        2) greater than 15 to 70 weight percent hydroxy-containing monomer based on a total weight of monomer in the second reaction mixture;
        3) an optional UV crosslinking monomer having an aromatic ketone group wherein the weight average molecular weight is measured with the method according to the description.

9. The crosslinked composition of claim 8, wherein the crosslinked composition is a pressure-sensitive adhesive or a heat bondable adhesive.

10. The crosslinked composition of claim 8 or 9, wherein the first reaction mixture and/or the second reaction mixture comprises a UV crosslinking monomer and wherein the crosslinkable composition is exposed to UV radiation.

11. The crosslinked composition of claim 8 or 9, wherein the second reaction mixture and the first reaction mixture are both free of the optional UV crosslinking monomer and wherein the crosslinkable composition is exposed to ionizing radiation.

12. An article comprising:

    a substrate; and
    a layer of a crosslinkable composition according to any one of claims 1 to 7 positioned adjacent to the substrate.

13. An article comprising:

    a substrate; and
    a layer of a crosslinked composition according to any one of claims 8 to 11 positioned adjacent to the substrate.

14. The article of claim 13, wherein the substrate is a component of an electronic device.


**Patentansprüche**

1. Eine vernetzbare Zusammensetzung, umfassend:

    a) zu 50 bis 95 Gewichtsprozent ein erstes (Meth)acrylatcopolymer, bezogen auf ein Gesamtgewicht eines Polymermaterials in der vernetzbaren Zusammensetzung, wobei das erste (Meth)acrylatcopolymer ein Massenmittel in einem Bereich von 100.000 Dalton bis 1.500.000 Dalton aufweist, wobei das erste (Meth)acrylatcopolymer ein Reaktionsprodukt eines ersten Reaktionsgemischs ist, umfassend

        1) ein Alkyl(meth)acrylat;
        2) zu 0 bis 10 Gewichtsprozent ein optionales hydroxyhaltiges Monomer, bezogen auf ein Gesamtgewicht der Monomere in dem ersten Reaktionsgemisch; und
        3) ein optionales UV-vernetzendes Monomer, das eine aromatische Ketongruppe aufweist; und

    b) zu 5 bis 50 Gewichtsprozent ein zweites (Meth)acrylatcopolymer, bezogen auf das Gesamtgewicht des Polymermaterials in der vernetzbaren Zusammensetzung, wobei das zweite (Meth)acrylatcopolymer ein Massenmittel von größer als 10.000 Dalton bis weniger als 100.000 Dalton aufweist, wobei das zweite (Meth) acrylatcopolymer ein Reaktionsprodukt eines zweiten Reaktionsgemischs ist, umfassend

        1) ein Alkyl(meth)acrylat; und
        2) zu größer als 15 bis 70 Gewichtsprozent das hydroxyhaltige Monomer, bezogen auf ein Gesamtgewicht des Monomers in dem zweiten Reaktionsgemisch;
        3) ein optionales UV-vernetzendes Monomer, das eine aromatische Ketongruppe aufweist, wobei das Massenmittel mit dem Verfahren gemäß der Beschreibung gemessen wird.

2. Die vernetzbare Zusammensetzung nach Anspruch 1, wobei das erste (Meth)acrylatcopolymer ein Massenmittel in einem Bereich von 100.000 bis 500.000 Dalton aufweist, wobei das Massenmittel mit dem Verfahren gemäß der Beschreibung gemessen wird.

3. Vernetzbare Zusammensetzung nach Anspruch 1 oder 2, wobei das zweite (Meth)acrylatcopolymer ein Massenmittel in einem Bereich von 10.000 bis 80.000 Dalton aufweist, wobei das Massenmittel mit dem Verfahren gemäß der Beschreibung gemessen wird.

4. Die vernetzbare Zusammensetzung nach einem der Ansprüche 1 bis 3, wobei das erste Reaktionsgemisch zu 70 bis 100 Gewichtsprozent Alkyl(meth)acrylat, zu 0 bis 10 Gewichtsprozent das hydroxyhaltige Monomer, zu 0 bis 20 Gewichtsprozent nicht hydroxyhaltige polare Monomere und zu 0 bis 5 Gewichtsprozent das UV-vernetzende Monomer, bezogen auf das Gesamtgewicht der Monomere in dem ersten Reaktionsgemisch, umfasst.

5. Die vernetzbare Zusammensetzung nach einem der Ansprüche 1 bis 4, wobei das zweite Reaktionsgemisch zu 30 bis weniger als 85 Gewichtsprozent Alkyl(meth)acrylat, zu größer als 15 bis 70 Gewichtsprozent hydroxyhaltige Monomere, zu 0 bis 20 Gewichtsprozent das nicht hydroxyhaltige polare Monomer und zu 0 bis 10 Gewichtsprozent das UV-vernetzende Monomer, bezogen auf das Gesamtgewicht der Monomere in dem zweiten Reaktionsgemisch, umfasst.

**6.** Die vernetzbare Polymerzusammensetzung nach einem der Ansprüche 1 bis 5, ferner umfassend einen Klebrigmacher in einer Menge in einem Bereich von 5 bis 60 Gewichtsprozent, bezogen auf ein Gesamtgewicht der Feststoffe in der vernetzbaren Zusammensetzung.

**7.** Die vernetzbare Polymerzusammensetzung nach einem der Ansprüche 1 bis 6, wobei die Glasübergangstemperatur nicht größer als 30 °C ist, wobei die Glasübergangstemperatur mit dem Verfahren gemäß der Beschreibung gemessen wird.

**8.** Vernetzte Zusammensetzung, umfassend ein Reaktionsprodukt einer gegenüber ultravioletter Strahlung oder ionisierender Strahlung exponierten vernetzbaren Zusammensetzung, wobei die vernetzbare Zusammensetzung umfasst

    a) zu 50 bis 95 Gewichtsprozent ein erstes (Meth)acrylatcopolymer, bezogen auf ein Gesamtgewicht des Polymermaterials in der vernetzbaren Zusammensetzung, wobei das erste (Meth)acrylatcopolymer ein Massenmittel in einem Bereich von 100.000 Dalton bis 1.500.000 Dalton aufweist, wobei das erste (Meth)acrylatcopolymer ein Reaktionsprodukt eines ersten Reaktionsgemischs ist, umfassend

        1) ein Alkyl(meth)acrylat;
        2) zu 0 bis 10 Gewichtsprozent ein optionales hydroxyhaltiges Monomer, bezogen auf ein Gesamtgewicht der Monomere in dem ersten Reaktionsgemisch; und
        3) ein optionales UV-vernetzendes Monomer, das eine aromatische Ketongruppe aufweist; und

    b) zu 5 bis 50 Gewichtsprozent ein zweites (Meth)acrylatcopolymer, bezogen auf das Gesamtgewicht des Polymermaterials in der vernetzbaren Zusammensetzung, wobei das zweite (Meth)acrylatcopolymer ein Massenmittel von größer als 10.000 Dalton bis weniger als 100.000 Dalton aufweist, wobei das zweite (Meth)acrylatcopolymer ein Reaktionsprodukt eines zweiten Reaktionsgemischs ist, umfassend

        1) ein Alkyl(meth)acrylat; und
        2) zu größer als 15 bis 70 Gewichtsprozent das hydroxyhaltige Monomer, bezogen auf ein Gesamtgewicht des Monomers in dem zweiten Reaktionsgemisch;
        3) ein optionales UV-vernetzendes Monomer, das eine aromatische Ketongruppe aufweist, wobei das Massenmittel mit dem Verfahren gemäß der Beschreibung gemessen wird.

**9.** Die vernetzte Zusammensetzung nach Anspruch 8, wobei die vernetzte Zusammensetzung ein Haftkleber oder ein heißverklebbarer Kleber ist.

**10.** Die vernetzte Zusammensetzung nach Anspruch 8 oder 9, wobei das erste Reaktionsgemisch und/oder das zweite Reaktionsgemisch ein UV-vernetzendes Monomer umfasst, und wobei die vernetzbare Zusammensetzung UV-Strahlung exponiert ist.

**11.** Die vernetzte Zusammensetzung nach Anspruch 8 oder 9, wobei das zweite Reaktionsgemisch und das erste Reaktionsgemisch beide frei von dem optionalen UV-vernetzenden Monomer sind, und wobei die vernetzbare Zusammensetzung ionisierender Strahlung exponiert ist.

**12.** Ein Gegenstand, umfassend:

    ein Substrat; und
    eine Schicht einer vernetzbaren Zusammensetzung nach einem der Ansprüche 1 bis 7, die angrenzend an das Substrat positioniert ist.

**13.** Ein Gegenstand, umfassend:

    ein Substrat; und
    eine Schicht einer vernetzten Zusammensetzung nach einem der Ansprüche 8 bis 11, die angrenzend an das Substrat positioniert ist.

**14.** Der Gegenstand nach Anspruch 13, wobei das Substrat eine Komponente einer elektronischen Vorrichtung ist.

**Revendications**

1. Composition réticulable comprenant :

   a) 50 à 95 pour cent en poids d'un premier copolymère de (méth)acrylate sur la base d'un poids total de matériau polymère dans la composition réticulable, le premier copolymère de (méth)acrylate ayant une masse moléculaire moyenne en poids comprise dans une plage de 100 000 Daltons à 1 500 000 Daltons, dans laquelle le premier copolymère de (méth)acrylate est un produit de réaction d'un premier mélange réactionnel comprenant

   1) un (méth)acrylate d'alkyle ;
   2) 0 à 10 pour cent en poids d'un monomère à teneur en hydroxy sur la base d'un poids total de monomères dans le premier mélange réactionnel ; et
   3) un monomère de réticulation UV facultatif ayant un groupe cétone aromatique ; et

   b) 5 à 50 pour cent en poids d'un second copolymère de (méth)acrylate sur la base du poids total de matériau polymère dans la composition réticulable, le second copolymère de (méth)acrylate ayant une masse moléculaire moyenne en poids supérieure à 10 000 et inférieure à 100 000 Daltons, dans laquelle le second copolymère de (méth)acrylate est un produit de réaction d'un second mélange réactionnel comprenant

   1) un (méth)acrylate d'alkyle ; et
   2) plus de 15 à 70 pour cent en poids de monomère à teneur en hydroxy sur la base d'un poids total de monomère dans le second mélange réactionnel ;
   3) un monomère de réticulation UV facultatif ayant un groupe cétone aromatique, dans laquelle la masse moléculaire moyenne en poids est mesurée par la méthode selon la description.

2. Composition réticulable selon la revendication 1, dans laquelle le copolymère de (méth)acrylate a une masse moléculaire moyenne en poids comprise dans une plage de 100 000 à 500 000 Daltons, dans laquelle la masse moléculaire moyenne en poids est mesurée par la méthode selon la description.

3. Composition réticulable selon la revendication 1 ou 2, dans laquelle le copolymère de (méth)acrylate a une masse moléculaire moyenne en poids comprise dans une plage de 10 000 à 80 000 Daltons, dans laquelle la masse moléculaire moyenne en poids est mesurée par la méthode selon la description.

4. Composition réticulable selon l'une quelconque des revendications 1 à 3, dans laquelle le premier mélange réactionnel com prend 70 à 100 pour cent en poids de (méth)acrylate d'alkyle, 0 à 10 pour cent en poids de monomère à teneur en hydroxy, 0 à 20 pour cent en poids de monomères polaires non à teneur en hydroxy, et 0 à 5 pour cent en poids de monomère de réticulation UV sur la base du poids total de monomères dans le premier mélange réactionnel.

5. Composition réticulable selon l'une quelconque des revendications 1 à 4, dans laquelle le second mélange réactionnel comprend 30 à moins de 85 pour cent en poids de (méth)acrylate d'alkyle, plus de 15 à 70 pour cent en poids de monomères à teneur en hydroxy, 0 à 20 pour cent en poids de monomères polaires non à teneur en hydroxy, et 0 à 10 pour cent en poids de monomère de réticulation UV sur la base du poids total de monomères dans le second mélange réactionnel.

6. Composition polymère réticulable selon l'une quelconque des revendications 1 à 5, comprenant en outre un agent collant en une quantité de 5 à 60 pour cent en poids sur la base d'un poids total de matières solides dans la composition réticulable.

7. Composition polymère réticulable selon l'une quelconque des revendications 1 à 6, dans laquelle la température de transition vitreuse n'est pas supérieure à 30 °C, dans laquelle la température de transition vitreuse est mesurée par la méthode selon la description.

8. Composition réticulée comprenant un produit de réaction d'une composition réticulable exposée à un rayonnement ultraviolet ou à un rayonnement ionisant, dans laquelle la composition réticulable comprend

   a) 50 à 95 pour cent en poids d'un premier copolymère de (méth)acrylate sur la base d'un poids total de matériau polymère dans la composition réticulable, le premier copolymère de (méth)acrylate ayant une masse moléculaire moyenne en poids comprise dans une plage de 100 000 Daltons à 1 500 000 Daltons, dans laquelle le premier copolymère de (méth)acrylate est un produit de réaction d'un premier mélange réactionnel comprenant

1) un (méth)acrylate d'alkyle ;
2) 0 à 10 pour cent en poids d'un monomère à teneur en hydroxy sur la base d'un poids total de monomères dans le premier mélange réactionnel ; et
3) un monomère de réticulation UV facultatif ayant un groupe cétone aromatique ; et

b) 5 à 50 pour cent en poids d'un second copolymère de (méth)acrylate sur la base du poids total de matériau polymère dans la composition réticulable, le second copolymère de (méth)acrylate ayant une masse moléculaire moyenne en poids supérieure à 10 000 et inférieure à 100 000 Daltons, dans laquelle le second copolymère de (méth)acrylate est un produit de réaction d'un second mélange réactionnel comprenant

1) un (méth)acrylate d'alkyle ; et
2) plus de 15 à 70 pour cent en poids de monomère à teneur en hydroxy sur la base d'un poids total de monomère dans le second mélange réactionnel ;
3) un monomère de réticulation UV facultatif ayant un groupe cétone aromatique, dans laquelle la masse moléculaire moyenne en poids est mesurée par la méthode selon la description.

9. Composition réticulée selon la revendication 8, dans laquelle la composition réticulée est un adhésif sensible à la pression ou un adhésif thermosoudable.

10. Composition réticulée selon la revendication 8 ou 9, dans laquelle le premier mélange réactionnel et/ou le second mélange réactionnel comprend un monomère de réticulation UV et dans laquelle la composition réticulable est exposée à un rayonnement UV.

11. Composition réticulée selon la revendication 8 ou 9, dans laquelle le second mélange réactionnel et le premier mélange réactionnel sont tous deux exempts du monomère de réticulation UV facultatif et dans laquelle la composition réticulable est exposée à un rayonnement ionisant.

12. Article comprenant :
un substrat ; et
une couche d'une composition réticulable selon l'une quelconque des revendications 1 à 7 positionnée de manière adjacente au substrat.

13. Article comprenant :

un substrat ; et
une couche d'une composition réticulée selon l'une quelconque des revendications 8 à 11 positionnée de manière adjacente au substrat.

14. Article selon la revendication 13, dans lequel le substrat est un composant d'un dispositif électronique.

**EP 4 061 904 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016083629 A1
- US 2016289514 A1
- US 2019002734 A1
- US 8137807 B2, Clapper
- US 9102774 B2, Clapper
- US 5804610 A, Hamer
- US 6294249 B, Hamer
- US 5986011 A, Ellis
- US 5637646 A, Ellis
- US 4737559 A, Kellen